# EUROPÄISCHE PATENTSCHRIFT

(11) **EP 3 475 193 B1**
(45) Veröffentlichungstag und Bekanntmachung des Hinweises auf die Patenterteilung: **02.03.2022**
(21) Anmeldenummer: 17725172.5
(22) Anmeldetag: 24.04.2017
(51) Int. Cl.: B65G 1/04, G06Q 50/28

(54) **VERFAHREN UND VORRICHTUNG ZUR AUTOMATISCHEN ANNAHME, EINLAGERUNG UND AUSGABE VON IN EINER VERPACKUNG AUFGENOMMENEN WAREN UND/ODER WARENKOMMISSIONEN SOWIE VERPACKUNG**
METHOD AND DEVICE FOR AUTOMATICALLY RECEIVING, STORING AND DISPENSING OF ARTICLES AND/OR ARTICLE COMMISSIONS RECEIVED IN A PACKAGING, AND PACKAGING
PROCÉDÉ ET DISPOSITIF DE RÉCEPTION, DE STOCKAGE ET D'ÉMISSION AUTOMATIQUES DE MARCHANDISES ET/OU DE COMMISSIONS DE MARCHANDISES CONTENUES DANS UN EMBALLAGE ET EMBALLAGE

(30) Priorität: 22.04.2016 DE 102016004914; 12.12.2016 DE 102016014676
(43) Veröffentlichungstag der Anmeldung: 01.05.2019
(73) Patentinhaber: Kropp, Daniel, 61137 Schöneck (DE)
(72) Erfinder: Kropp, Daniel, 61137 Schöneck (DE)
(74) Vertreter: Stoffregen, Hans-Herbert
(86) Internationale Anmeldenummer: PCT/EP2017/059684
(87) Internationale Veröffentlichungsnummer: WO 2017/182674

(56) Entgegenhaltungen:
- EP-A1- 2 881 905
- DE-A1- 4 120 287
- DE-A1-102008 054 711
- DE-U1-202015 103 841
- JP-A- H01 156 298
- JP-A- H08 119 411
- JP-A- H10 250 803
- US-A- 5 380 139
- US-A1- 2006 275 625
- DATABASE WPI Week 201629 Thomson Scientific, London, GB; AN 2016-23722F XP002775725, -& CN 205 150 486 U (ZHEJIANG MEINONG CENTURY GROUP CO LTD) 13. April 2016 (2016-04-13)
- DATABASE WPI Week 201418 Thomson Scientific, London, GB; AN 2014-E10790 XP002775726, -& JP 2014 041410 A (TOPPAN PRINTING CO LTD) 6. März 2014 (2014-03-06)

## Beschreibung

Die Erfindung bezieht sich auf ein Verfahren zur automatischen Annahme, Einlagerung und Ausgabe von in einer Verpackung aufgenommenen Waren und/oder Warenkommissionen nach dem Oberbegriff des Anspruchs 1.

Des Weiteren bezieht sich die Erfindung auf eine Vorrichtung zur Durchführung des Verfahrens nach dem Oberbegriff des Anspruchs 3.

Eine Vorrichtung und ein Verfahren der eingangs genannten Art ist aus US 5,380,139 bekannt. Die Vorrichtung umfasst ein Handling-System mit einem Lager-Roboter sowie einem Lagersystem in Form eines Regalsystems, wobei der Lager-Roboter eine Aufnahme-/Ausgabeeinheit aufweist, mit einem Transportbereich auf dem die Verpackung während des Transports gelagert ist und einem oberhalb des Transportbereichs verschieb-und/oder verschwenkbar angeordneten Greif-, Schiebe- oder Zugmittel, wobei in oder hinter dem Greif-, Schiebe- oder Zugmittel ein elektromagnetisches Mittel, wie Elektromagnet, angeordnet ist und wobei das Greif-, Schiebe- oder Zugmittel konfiguriert ist, die Verpackung magnetisch zu erfassen und zumindest bereichsweise auf den Transportbereich zu ziehen bzw. von dem Transportbereich zu schieben. Der Transportbereich ist als ein Rollen- bzw. Förderband ausgebildet. Während des Transports ist die Verpackung weder durch das Roll- bzw. Förderband noch durch das Greif-, Schiebe- oder Zugmittel fixiert.

Die DE 41 20 287 A1 betrifft ein Regalstapelsystem in einem automatisierten Lager zum Einbringen magnetisch erfassbarer Gegenstände in funktionelle Regalböden, die von aus Pfeilern hervorstehenden Konsolen gebildet werden. Die Fördervorrichtung umfasst einen in waagerechter Richtung und quer zur Bahn teleskopartig zwischen die Pfeiler einzuschiebenden Verschiebetisch. Dieser Verschiebetisch ist an seiner Oberseite mit Magneten zum Erfassen des Gegenstandes bestückt. Wenigstens das Oberteil des Tisches ist in seiner Breite kleiner als die zu transportierenden Gegenstände und der gegenseitige Abstand der Konsolen in Verschiebetisch-Querrichtung ist größer als die Breite des Tisches, aber kleiner als die Abmessungen des einzulagernden Gegenstandes in dieser Richtung. Folglich können nur Gegenstände einer bestimmten Breite und Länge transportiert werden.

Die JP 10250803 A betrifft eine Vorrichtung zum Transport von mit Flüssigkeit gefüllten Produkten, die eine magnetische Verpackung aufweisen und durch einen Permanentmagneten erfasst werden. Die Produkte werden durch ein magnetisches Hebemittel angehoben und anschließend transportiert.

Die EP 2 881 905 A1 betrifft ein Paket-Terminal zur Handhabung von zumindest abschnittsweise magnetisch oder ferromagnetisch ausgebildeten Verpackungen. Die Handhabung erfolgt mit Hilfe eines Lager-Roboters mittels eines in X- und Y-Richtung verfahrbaren Laufbandes, wobei das Laufband abschnittsweise magnetisch ausgebildet ist.

Die DE 20 2015 2013 841 betrifft ein Warendepot zum Handling und/oder Vertrieb von Waren, wobei Verpackungen mittels eines Schiebe- und/oder Zugmittels auf eine Transportfläche einer Annahme-/Ausgabeeinheit eines Lager-Roboters gezogen bzw. von dieser Transportfläche geschoben werden. Zum Erfassen und Fixieren der Verpackung sind Saugmittel beschrieben.

Bisherige Technologien zeichnen sich dadurch aus, dass ein Handhabungssystem Waren und/oder Warenkommissionen bei Einlagerung auf verschiedenste Weise "greift" oder "anhebt", und diese dann zum vorbestimmten Lagerort transportiert und diese dort wieder "ablegt". Beim Auslagern verfährt das Handhabungssystem dann wieder zum Ort an welchem sich die Waren und/oder Warenkommissionen befinden, "greift" diese wieder oder saugt sie an, "hebt" sie an und transportiert diese wieder zum Ort, an welchem die weitere Ausgabe erfolgt und "legt" oder "setzt" diese dort wieder ab.

Hierbei werden derzeit unterschiedliche Greiftechniken, wie z.B. pneumatisch oder mechanisch angetriebene Zangen oder Werkzeuge eingesetzt, welche durch Unterdrucktechniken, wie z.B. Saugplatten, arbeiten.

Bei Waren, wie z.B. Medikamenten, sind diese Techniken geeignet, da die Verpackung, auch wenn sie nur aus scheinbar unstabilen Materialien, wie Pappe, hergestellt ist, dennoch im Verhältnis zum Gesamtgewicht sehr stabil und somit sicher handhabbar ist.

Ein weiterer Aspekt welcher eine solche Handhabung ermöglicht, ist, dass wie im Beispiel des Medikamentenpäckchens das Gewicht des Inhaltes dieser Verpackung oftmals sehr gleichmäßig verteilt ist.

Sollen jedoch Verpackung aus Pappe oder Verbundstoffen wie z.B. ein Tetrapak (eingetragene Marke), Waren als Inhalt haben, welche im Verhältnis zur Verpackung schwerer sind, oder nicht gleichmäßig beladen werden können, so ist ein Vakuumsaugmittel nicht für ein sicheres und schnelles Handling geeignet.

Händisch zusammengestellte Warenkommissionen sind in der Regel nicht gleichmäßig in einem Paket zusammenzustellen. Dies hat zur Folge, dass beim automatisierten Handling dieser Pakete höhere Wankkräfte entstehen, als bei linear gleichmäßig beladenen Paketen, wie beispielsweise Medikamentenpäckchen.

Außerdem ist die Verpackung aus Pappe oder ähnlichem Material bei Paketen mit einem Gewicht von ca. 1-7 kg. im Verhältnis deutlich instabiler, als beispielsweise einem Medikamentenpäckchen, welches nur wenige Gramm schwer ist.

Diese können, da sie a) gleichmäßig beladen sind und/oder b) eine zum Gewicht relativ feste Verpackung aufweisen, mit den derzeitig am Markt vorhandenen Handhabungsgeräten, wie z.B. Vakuumsaugern, angesaugt werden und so zum Lagerplatz transportiert werden.

Eine solch effiziente Handhabungslösung kann bei schwereren Paketen nicht eingesetzt werden, ohne die Geschwindigkeit beim Handhabungsvorgang stark zu drosseln, oder Beschädigungen der Warenverpackung, oder den Verlust der Kommission und somit Handhabungsausfälle in Kauf zu nehmen.

Beim Einsatz von Greifwerkzeugen muss zudem ein bestimmter Anpressdruck eingestellt werden. Dies kann beim Greifen von z.B. in Folie verpackten verderblichen Nahrungsmitteln zu Qualitätsverlust durch Druckstellen führen. Zudem ist die Einstellung des Anpressdrucks aufgrund unterschiedlicher Größen und Gewichte nicht verläßlich möglich.

Davon ausgehend liegt der vorliegenden Erfindung die Aufgabe zu Grunde, ein Verfahren und eine Vorrichtung sowie eine Verpackung der eingangs genannten Art derart weiterzubilden, dass die zu handhabende Ware oder Warenkommission bei einfacher Verpackung schnell und sicher gehandhabt werden können. Zudem soll bei geringem technischem Aufwand eine hohe Lagerraumnutzung erreicht werden.

Die Aufgabe wird erfindungsgemäß durch die Merkmale des Anspruchs 1 gelöst.

Die zumindest abschnittsweise magnetische oder ferromagnetische Verpackung wird durch das elektromagnetische Greif-, Schiebe- und/oder Zugmittel auf eine zumindest abschnittsweise magnetisierbare vorzugsweise elektromagnetische Transportfläche gezogen und/oder geschoben, wobei die zumindest abschnittsweise magnetische oder ferromagnetische Verpackung auf der zumindest abschnittsweise magnetisierbaren, wie elektromagnetischen, Transportfläche während des Transports fixiert wird.

Vorzugsweise wird die zumindest abschnittsweise magnetische oder ferromagnetische Verpackung durch Aktivieren der elektromagnetischen Vorrichtung des elektromagnetischen Greif-, Schiebe- und/oder Zugmittels und durch Aktivierung des magnetisierbaren Abschnitts der Transportfläche fixiert.

Einer der wesentlichen Vorteile des Verfahrens ist darin zu sehen, dass die zu bewegende Ware oder Warenkommission nicht in Hardcases, sondern in vergleichsweise resourcenschonenden Verpackungen, auch Einweg- oder Mehrwegverpackungen, welche keine feste oder glatte Oberfläche haben müssen, schnell und sicher gehandhabt werden können. Dabei wird gegenüber dem Stand der Technik eine deutlich höhere Lagerausnutzung mit weniger technischem Aufwand erreicht; denn im Gegensatz zum Stand der Technik müssen keine Greifzangenwerkzeuge verwendet werden, welche einen seitlichen oder vertikalen Abstand zu benachbarten Verpackungen oder Regalböden benötigen. Durch den magnetischen Kraftschluss können die Verpackungen aus dem Lagerplatz gezogen oder in diesen geschoben werden. Auch ist die Verpackung während des Transports magnetisch fixiert.

Folglich können Verpackungen verwendet werden, die im Verhältnis zum Gesamtgewicht des Inhalts wesentlich instabiler sind. Die Verpackung muss nicht fest bzw. hart sein. Ferner kann eine aufwendige und anfällige Vakuumtechnik entfallen. Verpackungen mit ebenen Flächen, welche mit Feuchtigkeit oder Reif belegt sind, können durch das magnetische Fixieren störungsfrei bewegt werden.

Des Weiteren wird die Aufgabe durch eine Vorrichtung mit den Merkmalen des Ansprusch 3 gelöst.

Bei einer derartigen Vorrichtung ist vorgesehen, dass im oder hinter dem Greif-, Schiebe-oder Zugmittel eine elektromagnetische Vorrichtung wie Elektromagnet platziert ist, mit welcher die Verpackung der Waren und/oder Warenkommissionen an dem Greif-, Schiebe- oder Zugmittel fixiert wird.

Zudem ist in oder unter der Transportfläche eine elektromagnetische Vorrichtung, wie Elektromagnet, platziert, um die Verpackung beim Transport zu fixieren.

Die Verpackung zeichnet sich dadurch aus, dass diese aus einem Verbundstoff mit einer Einlagerung und/oder einem Verbund mindestens eines magnetischen oder ferromagnetischen Materials hergestellt ist.

Die Verpackung ist vorzugsweise aus einem oder mehreren nichtmagnetischen Materialien oder Stoffen hergestellt, welche innen oder außen mit einem magnetischen oder ferromagnetischen Material bestückt und/oder in einer besonderen Ausführung mit einem solchen Material fixiert, wie verklebt, ist.

Auch kann das magnetische oder ferromagnetische Material vollständig oder teilweise als ein magnetischer oder ferromagnetischer Einweg- oder Mehrwegchip oder als ein Zahlungsmittel, wie Münze, ausgebildet sein.

Vorzugsweise ist die Verpackung aus einem Verbundstoff aus zwei oder mehreren Materialien ausgebildet, von welchen mindestens ein Material magnetisch oder ferromagnetisch ist.

Alternativ kann die Verpackung aus einem unmagnetischen Stoff gefertigt sein und durch innen- und/oder außenseitiges Anbringen von magnetischem oder ferromagnetischem Material, wie Metall, voll- oder teilmagnetisch ausgebildet sein.

Der magnetische oder ferromagnetische Stoff ist vorzugsweise in Form einer Metallfolie in den Verbundwerkstoff einlaminiert und/oder auf den unmagnetischen Rohstoff, wie Pappe, innen oder außen fixiert wie verklebt.

Die Verpackung umfasst einen Verbundstoff aus zwei oder mehreren Materialien, von welchem mindestens ein Material magnetisch oder ferromagnetisch ist, oder aus einem unmagnetischen Stoff gefertigt ist und durch in- und/oder außenseitigen anbringen von magnetischen oder ferromagnetischen Material, wie Metall, voll- oder teilmagnetisch ist. In einer besonderen Ausführung geschieht dies besonders ressourcenschonend.

Die Verpackung ist somit von dem elektromagnetischen Greif-, Schiebe- oder Zugmittel sowie der elektromagnetischen Transportfläche fixier- und/oder bewegbar.

Bei derzeit oft verwendeten Handhabungssystemen werden in der Hauptsache Verpackungen durch Vakuumsauger gegriffen oder gepickt und somit von einem Ort zum anderen bewegt oder transportiert.

Wird eine Verpackung aus einem Verbundstoff mit Einlage eines magnetischen oder ferromagnetischen Stoffes hergestellt, oder aus einem unmagnetischen Rohstoffes, wie Pappe, hergestellt und mit einem magnetischen oder ferromagnetischen Material innen oder außen bestückt und in einer besonderen Ausführung mit einem solchen magnetischen oder ferromagnetischen Material verklebt oder durch eine andere Art fixiert, so kann diese Verpackung durch ein elektromagnetisches Greifmittel, Schieber oder Zugvorrichtung, sowie einer elektromagnetischen Transportfläche fixier- und/oder bewegt werden.

Dies hat den Vorteil, dass sich zum einen höhere Gewichte, als auch ungleichmäßig verteilte Gewichte in dieser ganz oder teilmagnetischen Verpackung befinden können und diese Verpackung mittels eines elektromagnetischen Greifmittels, Schieber oder Zugvorrichtung, sowie einer elektromagnetischen Transportfläche fixiert und/oder bewegt werden kann und sich daraus für solche Verpackungen und deren Inhalt durch ein elektromagnetisches Fixieren, an einem Zug oder Schiebemittel und/oder Greifmittel und oder auf einer elektromagnetischen Transportfläche ein wesentlich sicheres und schnelleres Handling realisieren lässt.

Dies kann unter anderem dadurch geschehen, dass durch Aktivieren der elektromagnetischen Vorrichtung, welche sich in oder an einem Zug- und/oder Schiebe-und/oder Greifmittel befindet, die Verpackung fixiert, sie auf eine Transportfläche, welche in diesem Fall auch mit einer elektromagnetischen Vorrichtung an oder in dieser Transportfläche ausgestattet ist, zieht oder schiebt, diese vom Zug- und/oder Schiebe-und/oder Greifmittel durch deaktivieren der elektromagnetischen Vorrichtung löst, die im, oder an der Transportfläche befindliche elektromagnetische Vorrichtung aktiviert wird, somit die Verpackung auf oder unter dieser fixiert wird und somit schnell und sicher zu einem anderen Ort transportiert werden kann.

Dort angekommen, kann die Verpackung durch deaktivieren der elektromagnetischen Vorrichtung in oder an der Transportfläche abgelegt und/oder wieder durch ein mit einer elektromagnetischen Vorrichtung ausgestatteten Zug- und/oder Schiebe- und oder Greifmittel fixiert werden und auf beispielsweise einen Lagerort bewegt werden.

Ein solches elektromagnetisches Handhabungssystem kann somit nicht nur magnetische Elemente, sondern auch Verpackungen, welche aus einem Verbundstoff mit Einlage eines magnetischen Materials und/oder Verpackungen, welche aus einem nichtmagnetischen Material, wie z.B. Pappe oder anderes gefertigt sind, aber innen oder außen mit einem magnetischen Material bestückt und/oder in einer besonderen Ausführung mit einem solchen magnetischen Material verklebt oder durch eine andere Art fixiert sind, sicher und schnell handeln.

Mit derzeitig aus Verbundstoffen hergestellte Verpackungen, wie z.B. ein Tetrapak, ist dies nicht möglich, da die verwendeten Materialien, wie z.B. Kunststoffe, Pappe, Papier oder Aluminium, nicht magnetisch sind.

Besonders ressourcenschonend ist diese magnetische Verpackung in dem Fall, wenn das magnetische Material, welches in den Verbundstoff mit eingelegt wird, oder wenn die Verpackung aus einem unmagnetischen Rohstoff, wie Pappe, hergestellt wird und mit einem magnetischen Material innen oder außen bestückt und in einer besonderen Ausführung mit einem solchen magnetischen Material verklebt oder durch eine andere Art fixiert wird, dieses magnetische Material vollständig oder teilweise als ein magnetischer Einweg- oder Mehrwegchip oder als ein magnetisches Zahlungsmittel, wie Münze, ausgebildet ist. Die magnetischen Chips oder Zahlungsmittel können in Aufnahmen, wie innen- oder außenseitigen Taschen, angeordnet sein.

Wird ein magnetisches Material welcher Form auch immer wie beschrieben verwendet, entstehen hierfür sowohl Kosten bei der Produktion als auch beim Recycling, welche durch einen Kunden schlussendlich refinanziert werden müssen. Außerdem werden hierbei Ressourcen, wie z.B. Metall, verbraucht.

Münzen, wie z.B. die 5 Cent Euromünze oder andere, verfügt/verfügen durch Ihre Materialzusammensetzung über eine hervorragende magnetische Eigenschaft, bzw. können sehr gut von einem Magneten, wie Elektromagneten, angezogen werden.

Verwendet man solche oder andere Münzen dazu, um wie beschrieben eine solche Verpackung von einem elektromagnetischen Greifmittel, Schieber oder Zugvorrichtung und/oder einer elektromagnetischen Transportfläche fixier- und/oder bewegbar zu machen, werden diese Münzen wegen Ihrer Eigenschaft genutzt und nicht verbraucht, da diese vor dem Recycling der übrigen Verpackung getrennt und als Zahlungsmittel verwendet werden kann.

Zusammenfassend bezieht sich die Erfindung auf ein Verfahren und eine Vorrichtung zur automatischen Annahme, Einlagerung und Ausgabe von Waren und/oder Warenkommissionen verschiedener Größen und Formaten mittels eines magnetischen Schiebe- oder Zugmittels, sowie einer magnetisierbaren Transportfläche.

Durch das beschriebene Verfahren, mit Hilfe einer magnetisierbaren Transportfläche und einem magnetisierbaren Schiebe- oder Zugmittel, welches mit Elektromagneten ausgestattet ist, werden die Waren nicht frei, sondern wie auf einem Tablett von einem Standort zu einem anderen Standort oder weiter transportiert und da sie dabei durch den Elektromagneten zusätzlich fixiert werden können, ist ein wesentlich schnellerer und sicherer Handlingsvorgang möglich.

Anwendbar ist die in der Patentanmeldung beschriebene Erfindung, sowohl auf Food- als auch Nonfood-Warenkommissionen/Paketen, welche voll und/oder teilautomatisiert gehandelt werden sollen.

Das magnetische oder ferromagnetische Material kann auch direkt an der Ware fixiert sein.

Durch die erfindungsgemäßen Maßnahmen wird eine optimale Auslastung des Lagerraums erreicht. Dies war beim bisherigen Stand der Technik bei unterschiedlichen Warenformaten nur mit aufwendigen Greiftechniken möglich oder durch sehr hohen technischen Aufwand, der dadurch entsteht, dass beim Ablegen der Waren mechanisch betriebene Schubladensysteme zum Einsatz kommen, auf welchen dann die Waren abgelegt werden.

Ferner wird eine schnelle Annahme, Einlagerung und spätere Auslagerung erreicht, da die Ware während des Transports, sowohl durch das Schiebemittel und/oder Zugmittel und/oder die Transportfläche, fixiert ist.

Dadurch werden sehr schnelle Bewegungen, insbesondere Beschleunigungen der Annahme-/Ausgabeeinheit ermöglicht. Dadurch können Synergieeffekte genutzt werden, welche dadurch entstehen, dass im Falle dessen, dass mehrere Waren und/oder Warenkommissionen, welche sich an verschiedenen Lagerorten befinden oder zu diesen verbracht werden sollen, zu diesen transportiert werden können, ohne dass eine der Waren und/oder Warenkommissionen entsprechende Anzahl der Greif- bzw. Fixierwerkzeuge benötigt wird.

Da das Handhabungssystem gemäß der vorliegenden Erfindung durch eine Schleuse von der die Waren angebenden Person getrennt ist, wird der Vorteil erreicht, dass die Waren nicht direkt händisch korrekt in ein Greifsystem fixiert werden müssen. Dadurch ist es nicht notwendig, dass sich das Handhabungssystem durch aufwendige Technik genau auf eine Position einstellen muss, so dass auf zusätzliche Ausrichteinheiten verzichtet werden kann.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine schematische Darstellung des Warendepots,
- Fig. 2: eine Draufsicht des Warendepots mit Pkw- und Befahrungsstrecke,
- Fig. 3a, b: eine schematische Drauf- und Seitenansicht des Depots sowie eines Handling-Systems des Warendepots,
- Fig. 4: eine Draufsicht auf eine Annahme-/Ausgabeeinrichtung des Handlingsystems,
- Fig. 5: eine Seitenansicht der Annahme-/Ausgabeeinrichtung des Handlingsystems,
- Fig. 6a, b: eine Draufsicht sowie Seitenansicht auf ein Schiebemittel und/oder Zugmittel der Annahme-/Ausgabeeinrichtung,
- Fig. 7: eine Draufsicht auf eine zweite Ausführungsform einer Annahme-/Ausgabeeinrichtung,
- Fig. 8: eine Draufsicht, sowie eine Seitenansicht auf ein Schiebe oder Zugmittel in Blockform mit elektromagnetischer Vorrichtung,
- Fig. 9: eine Draufsicht sowie Seitenansicht auf ein Schiebe- und/oder Zugmittel mit Transportfläche mit elektromagnetischer Vorrichtung,
- Fig. 10: eine erste Verpackung mit zumindest bereichsweise magnetischem Material, wie Metallstreifen bzw. Metallfilm,
- Fig. 11: eine zweite Verpackung mit zumindest bereichsweise magnetischem Material, wie Metallstreifen bzw. Metallfilm,
- Fig. 12: eine dritte Verpackung mit magnetischem Material, wie magnetischen Einlagen, und
- Fig. 13: eine vierte Verpackung mit Aufnahmen für ein magnetisches Material, wie Chip oder Münze.

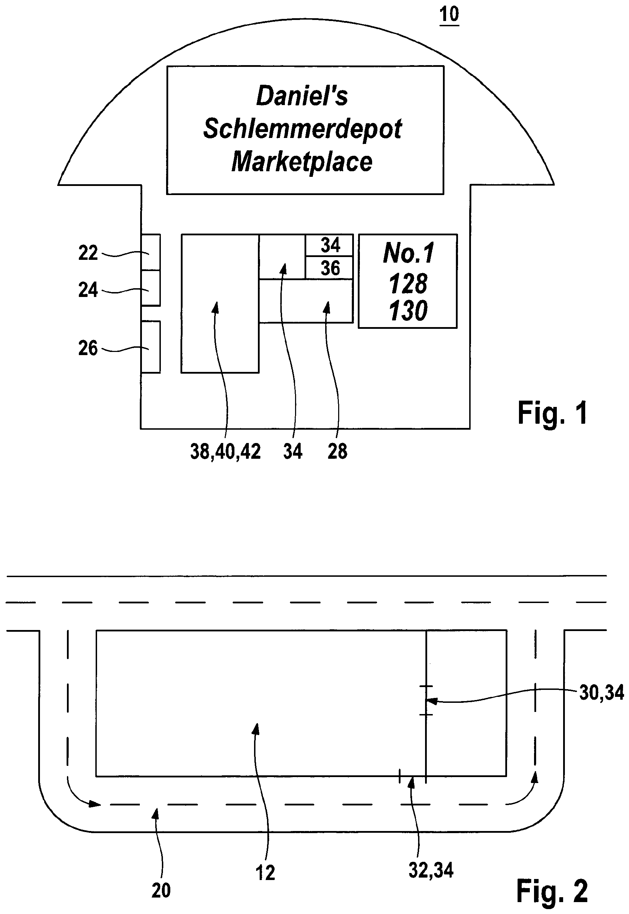

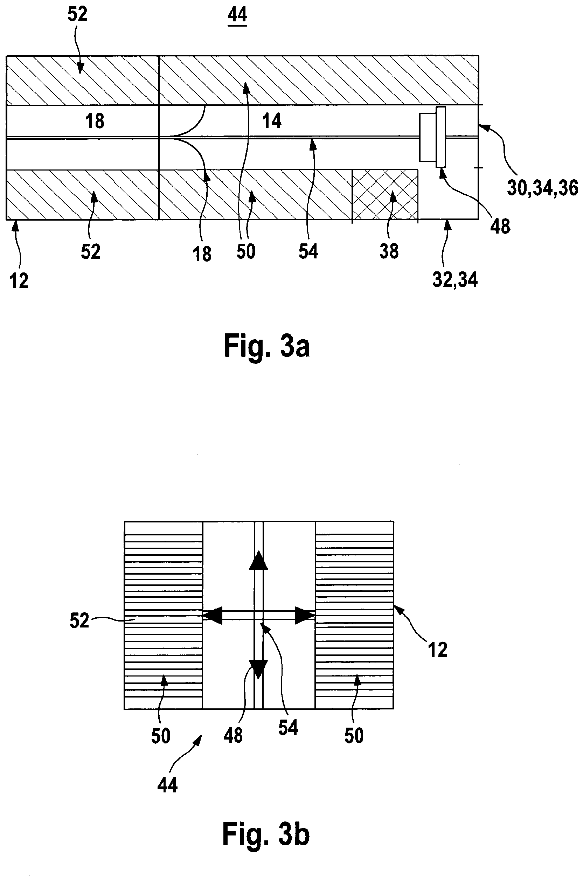

1. Philosophie der Erfindung
2.1 Konstruktion und technische Ausstattung des Depot's
   2.1.1 Beschreibung der Konstruktion
2.1.2 Skizze Konstruktionsbeispiel Figur 1+2 siehe Seite 40+41 bzw. Beschreibung Figur 1+2 Legende zu den Zeichnungen Seite 39
2.2 Klimatisierung
   2.2.1 Temperatursteuerung
   2.2.2 Luftfeuchtesteuerung
   2.2.3 Temperaturmonitoring mit Warnfunktion
2.3 Waren Ein und Ausgabeschacht
   2.3.1 Display zur Bedienung des Depot's
   2.3.2 Fingerprintsensoren
   2.3.3 Scanner zum Lesen von EAN und QR Codes
   2.3.4 Kundenkarten Lesefunktion
   2.3.5 Kassenfunktion
   2.3.6 Belegdrucker
   2.3.7 Primary/ Secondary SD
2.4 Das Lagersystem
2.4.1 Skizze Konstruktionsbeispiel Figur 3 Seite 42
   2.4.2 Das Regalsystem
   2.4.3 Der Lagerroboter
   2.4.4 Die Verpackung
2.5 Interne Hardware
   2.5.1 Rechner
   2.5.2 Server
2.6 Überwachungskameras
2.7 Stromzähler
2.8 Internetanschluss
2.9 Notstromversorgung
3. Externe Hardware
   3.1 Kommissionsterminal stationär
   3.2 Kommissionsterminal mobil
   3.3 Stationäres Fingerprint Lesegerät
   3.4 Gerät mit installierter Applikation zur mobilen Kommunikation mit dem Depot
4. Software:
   4.1 Softwarefunktionen für den Consumer
      4.1.1 Homepage "www.Schlemmerdepot.de"
      4.1.2 SD Marketplace eines jeden Depot's
         4.1.2.1 Der Einkauf im SD Onlineshop eines Akteurs
            A) Individuelle Bestellung
            B) Einkauf aus dem Vorratskühl- bzw. Vorratstiefkühlschrank des Akteurs
         4.1.2.2 SD Markethall
         4.1.2.3 SD Order Just in Sequence Delivery and Take off 4.1.2.4 SD Discount Shop
   4.2 Vergabe der Kundennummern
      4.2.1 SD Kunden Stammdaten
   4.3 Consumer Account
      4.3.1 Consumer Bilanz
      4.3.2 Family Account
      4.3.3 Forgotten Package Reminder
      4.3.4 SD Ordertrack
      4.3.5 SD Collecting Orders:
         4.3.6 Waren Informations App
         Software für den angeschlossenen Akteur
   4.4 Depot Manager - General Depot Manager
      4.4.1 SD DM Verteiler
      4.4.2 SD DM Chatfunction
   4.5 Akteurs Account
      4.5.1 Kundenverzeichnis mit Klärung des Kreditrahmens
      4.5.2 Onlineshop des Akteuers
      4.5.3 SD Production Assistant
      4.5.4 SD Slot Calculator
      4.5.5 SD Kommission
      4.5.6 SD MHD Reminder and Storage Assistant
      4.5.7 SD Paper-Case:
      4.5.8 SD Flyer-Store:
      4.5.9 SD Slot share n'trade
   4.5.10 SD Schnittstellen
      4.5.11 SD Finance
      4.5.11.1 Betriebskostenrechner mit Splitting Funktion:
      4.5.11.2 Cash Money:
      4.5.11.3 Akteur Forderungen:
         4.5.11.3.1 Offene Posten Liste:
         4.5.11.4 SD Bilanz:
         4.5.11.5 SD Finance Professional:
         4.5.11.5.1 Cash Money pro:
         4.5.11.5.2 SD Inkasso:
         4.5.11.5.3 SD Inkasso Pro:
   4.6 Warn- sowie Notfallprocedere
      4.6.1 Spannungsverlust
      4.6.2 Temperaturschwankungen außerhalb vorab definierter Norm
      4.6.3 Allgemeine Störungen
   5. Daniel's Schlemmerdepot Premium Marketplace
   6. Daniel's Schlemmerdepot Premium Marketplace Deluxe

### 1.1 Philosophie des Warendepots:

Das Warendepot, nachfolgend "Daniel's Schlemmerdepot Marketplace", "Depot" oder "SD" genannt, ist ein vollautomatisiertes, "mobiles" technisches Gerät, dass durch seine Konstruktion und Ausstattung in Form von Hard- und Software und seiner bidirektionalen, onlinefähigen Schnittstelle, durch selbständiges anwenden vorab definierter Algorithmen, einem oder mehreren angeschlossenen geschäftlichen Akteuren nachfolgend Akteur/e genannt, auf einem online E Marketplace, die Möglichkeit bietet, ihr Geschäft und oder ihre Waren zu präsentieren, Lebensmittel oder allgemeine Waren dort und auch direkt am SD anzubieten, Aufträge für die Akteure annimmt, sie an diese weiterleitet, durch diese beauftragt, mit im Depot vorrätigen Waren Handel betreibt, mit einem integrierten vollautomatisierten Lagerroboter Warenkommissionen annimmt, diese im integrierten Lagerregalsystem, sowohl im Plus- als auch im Minustemperatur Bereich, deponiert, temperatursensorisch sensible Waren EU und HACCP Hygienerichtlinien entsprechend gerecht lagert, verwaltungslogistische Aufgaben, sowie die des Lagerhaltungs-, Dokumentations-, Buchhaltungs-, Handels- und Abrechnungswesens, sowohl zwischen angeschlossenem Akteur und Konsumenten, nachfolgend "Consumer" genannt, als auch zwischen angeschlossenen Akteuren untereinander, selbständig durchführen kann, zur Kommunikation und Steuerung des Depot, sowohl den Akteuren sowie den Consumem aktuelle Applikationen zur Verfügung stellt, Aufgaben des Zahlungsverkehrs, sowohl in Bar als auch deren, die auf elektronischem Wege stattfindenden, sowohl zwischen B2C (Business to Consumer) als auch zwischen B2B (Business to Business) nach Aufforderung für diese durchführt, und nachdem der Consumer auf unterschiedlichste Weise, Autorität über die Waren erreicht hat, diese nach Freigabe durch den angeschlossenen Akteur, an den Consumer oder an eine andere durch den angeschlossenen Akteur definierte Person abgibt.

Dies fordert ein breites qualitativ hochwertiges Warenangebot, einen bequemen und übersichtlichen Bestellvorgang, eine einfache Verifizierung am SD, sowie eine schnelle unkomplizierte Bezahlung und Ausgabe der Waren, welche der Kunde in einem bzw. einer so hochwertigen Karton bzw. Verpackung ausgehändigt bekommt, dass selbst hier zu spüren ist, dass er diese Qualität genau hier als Kunde des "Daniel's Schlemmerdepot Marketplace" bekommt.

Der SD Akteur entspricht mit dem Angebot des SD diesen Anforderungen einer modernen Zeit. Ein Grundbaustein der Philosophie des SD ist der nachhaltige Umgang mit Ressourcen!

Ressourcen wie:
A) Nahrungsmitteln
   Mit ihnen wird beim Kauf im SD insofern nachhaltig umgegangen, dass trotz der Ermöglichung eines breiten Angebotes eine Überproduktion durch intelligente Planung und Vertrieb dieser, auf ein Minimum reduziert wird.
B) Energie
   Mit ihr wird beim SD zum einen durch das Zusammentreffen verschiedenster Waren, verschiedener Anbieter an einem Punkt, der kollektiven Lieferung dieser, für mehrere Kunden durch den einzelnen Akteur zu diesem Punkt, sowie des Einsatzes intelligenter Anwendungen, wie z.B. in Pkt. 4.5.9 SD Slot share n'trade beschrieben, durch gesteigerte Effizienz, sowohl durch die Einsparung von Elektrizität, als auch der von Kraftstoffen, wie Benzin oder Diesel, der Nachhaltigkeit entsprochen.

Eine weitere, und für den modernen SD Kunden zukünftig immer wichtiger werdende Ressource, ist die Ressource "Zeit"

### C) Zeit

Ihr wird beim SD mit durchdachtem Einsatz verschiedener Werkzeuge, wie z.B. effizient gestalteter Kommissionsabläufe, auf der Seite des Akteurs, der Ermöglichung der Bestellung rund um die Uhr, an 365 Tagen im Jahr auf der Seite des Kunden, aber auch und darauf zielt bspw. der Punkt 4.1.2.3 "SD Order Just in Sequence Delivery and Take off" durch synchronisierte, ineinandergreifende Abläufe, zwischen Akteur und Kunden, der Nachhaltigkeit entsprochen.

### 2. Konstruktion und technische Ausstattung des Depot's gemäß Fig. 1 bis 7

### 2.1 Beschreibung der Konstruktion

Fig. 1 zeigt ein Depot 10, das witterungsbeständig zur Aufstellung im Außenbereich konstruiert ist. Ein Grundrahmen des Depot's besteht aus einem Stahlgerüst, wobei als Wand, Decken und Bodenelemente isolierte Sandwichpanele verbaut werden.

Das Depot 10 wird in unterschiedlichen Größen und Ausführungen konstruiert und eingesetzt; vom kleinen Mini Depot 10 gemäß Fig. 1, welches bspw. an stark frequentierten Orten zu Fuß erreichbar ist, bis zum großen Depot 12, welches neben einer Kühlzone 14 optional auch über einen durch eine Abtrennung 16 abgetrennten Tiefkühlbereich 18 verfügt (Fig. 3).

Fig. 2 zeigt das Depot 12 im "Drive Thru Stil", welches von einem PKW 20 aus angefahren und bedient werden kann. Das Depot 10, 12 ist modular konstruiert, so dass es je nach geforderter Kapazität erweitert werden kann.

Das Dach und die Wände des Depot's dienen als hochwertige Werbefläche für das Schlemmerdepot.

### 2.2 Klimatisierung:

### 2.2.1 Temperaturregulierung:

Da das Depot 10, 12 für die Aufstellung im freien konstruiert wird, ist, um eine konstante gewünschte Temperatur im Gerät gewährleisten zu können, das Gerät mit einer Klimaanlage 22 ausgestattet, welche sowohl kühlt als auch heizt.

### 2.2.2 Luftfeuchteregulierung:

Damit die Verpackungen durch zu hohe Luftfeuchtigkeit keinen Schaden nehmen, ist im Depot ein Gerät 24 installiert, welches die Luftfeuchte reguliert.

### 2.2.3 Temperaturmonitoring mit Warnfunktion:

Im Depot 10, 12 ist ein digitales Temperaturaufzeichnungsgerät 26 mit Warnfunktion installiert, welches permanent den Temperaturverlauf im Depot protokolliert und im Falle einer Abweichung der Ist- von der Solltemperatur, online und/oder per Sms, seine Akteure informiert, um gegensteuern zu können, damit Verluste durch Verderb der Waren vermieden werden können.

### 2.3 Ein und Ausgabeschacht:

Je nach Größe und Gegebenheit des Aufstellungsortes des Depot's, wird dieses mit mindestens einem oder mehreren Ein- und Ausgabeschächten 28, und/oder zusätzlich einem Eingabeschacht 30 und/oder einem Ausgabeschacht 32 konstruiert und ausgestattet.

### 2.3.1 Display zur Bedienung des Depot's:

Die Bedienung des Depot's 10, 12 erfolgt über ein ebenfalls dem IP65 Schutzstandard entsprechendes Eingabemittel 34, wie Touchscreen Display. Das Display 32 befindet sich sowohl am Ein- und Ausgabeschacht 28, als auch am Eingabeschacht 30 und am Ausgabeschacht 32.

### 2.3.2 Fingerprintsensoren:

Optional wird ein Identifikationssystem 34, wie Fingerprintsensoren an den Schächten 28, 30, 32 des Depot 10, 12 installiert, an welchen der Benutzer des Depot's, sowohl seitens der Akteure und auch der Consumer, neben der Möglichkeit zur Verifizierung durch Pineingabe, EC, Kredit, oder Schlemmerdepotkarte, die Möglichkeit zur Verifizierung durch den eigenen Fingerabdruck geboten bekommt.

### 2.3.3 Scanner zum Lesen von EAN und QR Codes:

Ein Erfassungssystem 36, wie Scanner, befindet sich am Ein- und Ausgabeschacht 28, sowie am Eingabeschacht 30 des Depot's. Er scannt eine individuelle Kennung, wie Sendungs ID, welche auf einem Paketlabel der Ware gedruckt ist, und leitet die Information an ein Lagerhaltungssystem 38 weiter.

### 2.3.4 Kundenkarten Lesefunktion:

Wie bereits unter Punkt 2.3.2 beschrieben, ist die Schlemmerdepot-Kundenkarte neben anderen, eine Möglichkeit zur Verifizierung des Depotbenutzers, sowohl seitens des Consumers, als auch der Benutzer seitens der angeschlossenen Akteure.

### 2.3.5 Kassenfunktion:

Ein Großteil der Zahlungsvorgänge des Schlemmerdepot's werden online abgewickelt. Um Zahlungsvorgänge allerdings auch direkt am Warendepot 10, 12 zu gewährleisten, wird jedes Schlemmerdepot am Ein- und Ausgabeschacht 28 oder einem Ausgabeschacht 32 mit mindestens einem Kassenterminal 40 ausgestattet. Am Kassenterminal sind sowohl Zahlungen in Bar, als auch Zahlungen durch Debitkarten, wie bspw. Girocard, electronic cash/ec cash, Maestro und V PAY, und Kreditkarten, wie bspw. Master Card, Maestro, Visa oder American Express möglich.

Das Kassenterminal 48 ist so im, bzw. am Gerät 10, 12 integriert, dass die Bargeldentnahme, sowie die Bestückung des Terminals mit Wechselgeld von außen bspw. durch beauftragte Finanzdienstleister bzw. Geldtransportunternehmen, möglich ist, ohne das Depot selbst betreten zu müssen.

### 2.3.6 Belegdrucker:

Ein Drucker 42, der sich direkt am Ausgabeschacht 28, 32 befindet, druckt Quittungen, sowohl bei Ein- und Ausgabe von Sendungen am Depot, bei Bedarf werden aber auch Lieferscheine und Rechnungen gedruckt. Der Drucker kann auch eine von dem Depot generierte individuelle Kennung einer Ware drucken.

### 2.3.7 Primary/ Secondary SD:

Entschließt sich ein Betrieb dazu, Akteur eines Schlemmerdepot's zu werden, so wird das erste Schlemmerdepot an welchem er aktiv wird, als sein Primary Schlemmerdepot definiert. Auf dem Server dieses Depot's werden seine hauptsächlichen Daten, wie z.B. der Onlineshop eingerichtet. Entschließt er sich dazu, Akteur an einem weiteren oder mehrerer weiterer Depot's aktiv zu werden, so werden diese in der zeitlichen Reihenfolge seines Aktivwerdens als dessen Secondary Depot's 1-x beschrieben und mit den Primary Depot des Akteurs gekoppelt.

### 2.4 Lagersystem:

Fig. 3a und b zeigen eine Ausführungsform eines Lagersystems 44, umfassend ein Handlingsystem 46 mit Lagerroboter 48 sowie ein Regalsystem 50 mit Fächern 52 in Form von Slots.

### 2.4.1 Das Regalsystem:

Individuell je nach Größe des Depot's und abhängig vom geplanten Warensortiment, sind unterschiedliche Größen der Fächer 52 nachfolgend "Slot" genannt, im Depot konstruiert. Durch die Struktur der Benennung der einzelnen Slot's ist es, um eine optimale Auslastung des SD's zu erreichen, dem System möglich, auch kleinere Pakete in größere Slot's zwischenzulagern, solange das optimale Slot nicht verfügbar ist.

Hat das System ein kleineres Paket in ein größeres Slot eingelagert, erkennt es sobald das optimale Slot frei wird und lagert das Paket dann selbständig um, damit keine Platzkapazitäten verschwendet werden.

Die Ein- und Auslagerung der Waren übernimmt das Handlingsystem 46 mit vollautomatischem Lagerroboter 48, der auf einem Schienensystem 54 geführt ist.

Der Lagerroboter 48 kann Pakete unterschiedlicher Größen und Formen am Waren Ein-und Ausgabeschacht 28, 30 entgegennehmen, selbständig in das ihm vom System vorgegebenen Slot einlagern, auf Befehl des Systems dieses dort wieder aufnehmen und am Ausgabeschacht 32 wieder auslagern.

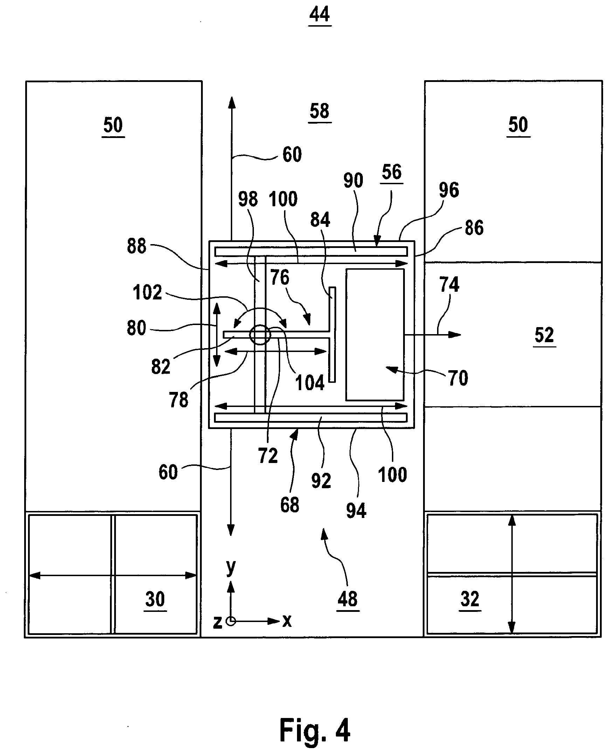

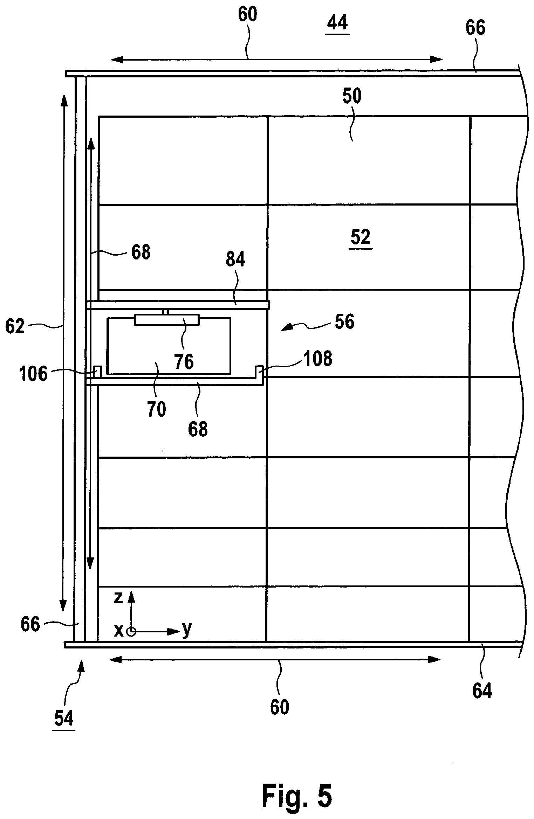

Die Fig. 4 und 5 zeigen jeweils eine Drauf- bzw. Seitenansicht einer Ausführungsform des Lagersystems 44 gemäß Fig. 3. Der Lagerroboter 48 umfasst eine Annahme-/Ausgabeeinheit 56, die entlang des Schienensystems 54 in einer Y-Z-Ebene in einem Zwischenraum 58 zwischen den Regalen 50 in Richtung der Pfeile 60, 62 verfahrbar angeordnet ist. Das Schienensystem 54 umfasst horizontal verlaufende Schienen 64, 66 sowie eine vertikal verlaufende Schiene 66, die sich zwischen den horizontal verlaufenden Schienen 64, 66 erstreckt und endseitig in diesen verfahrbar aufgenommen ist. Entlang der vertikalen Schiene 66 ist die Annahme-/Ausgabeeinrichtung 56 in horizontaler Richtung gemäß Pfeil 68 verfahrbar angeordnet, um die einzelnen Fächer 52 der Regale 50 ansteuern zu können.

Fig. 4 zeigt eine Ausführungsform der Annahme-/Ausgabeeinrichtung, wobei diese eine Lagerfläche 68 aufweist, auf der die Waren 70 transportiert werden. Die Ware 70 ist auf der Transportfläche 68 verschiebbar angeordnet, so dass diese mittels eines Schiebemittels 76 in Richtung des Pfeils 74 in ein Regalfach 52 verschoben werden kann. Das Schiebemittel 76 ist in Richtung der Pfeile 78, 80, d. h., in der X-Y-Ebene verschiebbar angeordnet. Das Schiebemittel 76 ist T-förmig ausgebildet und umfasst einen ersten Schenkel 82 und einen zweiten Schenkel 84, der im Wesentlichen rechtwinklig zu dem ersten Schenkel 82 und parallel zu Querrändern 86, 88 der Transportfläche 68 ausgerichtet ist.

Ein Linearantrieb 89 umfasst Führungsschienen 90, 92, die parallel oder im Wesentlichen parallel zu Längsrändern 94, 96 der Transportfläche 68 verlaufen. Zwischen den Führungsschienen 90, 92 erstreckt sich eine Querschiene 98, die entlang der Längsschienen 90, 92 in Richtung des Pfeils 100 verfahrbar ist.

Das Schiebemittel 76 ist über seinen ersten Schenkel 82 verschiebbar an der Querschiene 98 gelagert und in Richtung der Pfeile 78, 80 verfahrbar. Zudem ist der Schenkel 82 und somit das Schiebemittel 76 in Richtung des Pfeils 102 um eine Achse 104, die in Richtung der Z-Achse verläuft, drehbar gelagert, um zu ermöglichen, dass Waren 70 in beiden Richtungen auf die Lagerfläche gezogen bzw. von der Transportfläche in Fächer 52 geschoben werden können.

Als bevorzugte Ausführungsform ist vorgesehen, dass die Transportfläche schwenkbar in X-Z-Ebene schwenkbar gelagert ist, um zu ermöglichen, dass Waren 70 von der Transportfläche in ein Regalfach 52 gleiten bzw. der Schiebevorgang unterstützt wird.

Fig. 5 zeigt eine Seitenansicht der Annahme-/Ausgabeeinheit 56, der zu entnehmen ist, dass die Transportfläche 68 seitliche Begrenzungen 106, 108 aufweist, die sich in Längsrichtung der Transportfläche 68 erstrecken, so dass diese im Wesentlichen eine U-Form bildet. Die seitlichen Begrenzungen 106, 108 verhindern, dass bei einer Bewegung der Annahme-/Ausgabeeinheit in der Y-Z-Ebene, insbesondere in X-Y-Richtung, die Ware 70 auf der Transportfläche 68 fixiert ist. Dadurch können sehr große Beschleunigung der Annahme-/Ausgabeeinheit 76 erreicht werden.

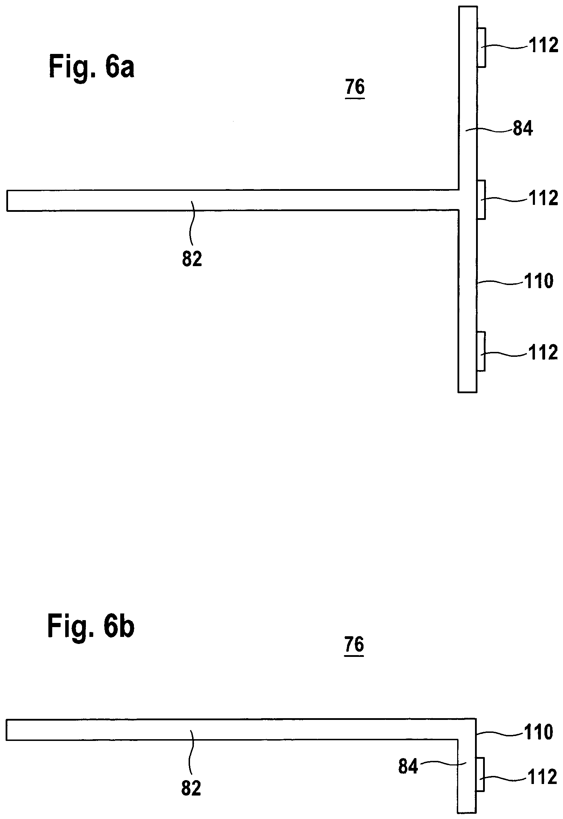

Fig. 6a zeigt das Schiebemittel 76 in einer Draufsicht, während Fig. 6b das Schiebemittel 76 in einer Seitenansicht zeigt. Das Schiebemittel 76 umfasst den Längsschenkel 82, der in dem Linearantrieb 89 verschiebbar sowie rotierbar gelagert ist. Der Querschenkel 84 verläuft rechtwinklig zu dem Längsschenkel 82 und weist eine vordere Fläche 110 auf, die beim Schieben der Ware 70 gegen diese anliegt.

Zum Anziehen der Ware 70 kann die Fläche 110 magnetische oder magnetisierbare Mittel 112, wie Elektromagnete, aufweisen, mit der eine zumindest bereichsweise magnetische oder ferromagnetische Verpackung der Ware 70 an dem Schiebemittel fixiert und sodann auf die Transportfläche gezogen werden kann.

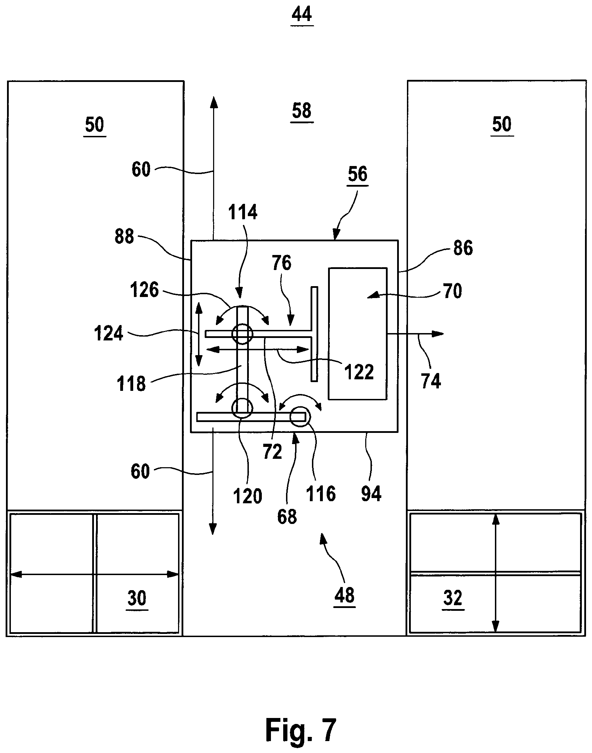

Fig. 7 zeigt eine Draufsicht einer zweiten Ausführungsform einer Annahme-/Ausgabeeinheit, wobei das Schiebemittel 76 an einer Greifarmvorrichtung 114 angeordnet ist, die einen ersten Arm 116 aufweist, der parallel oder im Wesentlichen parallel zu dem Längsrand 94 der Transportfläche 68 und einen zweiten Arm 118 aufweist, der über ein Gelenk 120 gelenkig mit dem ersten Arm 116 verbunden ist. Das Schiebemittel 76 ist entlang der Längsschiene 118 in Richtung der Pfeile 114, 122, 124 verfahrbar sowie in Richtung des Pfeils 126 drehbar gelagert, so dass die Elemente 116, 118 in Verbindung mit dem Schiebemittel 76 ein Gelenkarm bilden.

Folglich kann das Schiebemittel 76 durch die Greifarmvorrichtung 114 so gesteuert werden, dass die Ware 70 zu den beiden Längsseiten 86, 88 der Transportfläche 68 angenommen bzw. ausgegeben werden kann.

Durch die erfindungsmäße Ausführungsform wird erreicht, dass die Waren 70 und/oder Warenkommissionen nicht durch aufwendige oder teure Greiftechnik gegriffen zum Lagerort transportiert werden müssen, sondern durch das Schiebmittel 76, wie Schieber, nach der Annahme und während des Ein-/Auslagervorgangs verschoben werden.

Nachdem die Ware 70 und/oder Warenkommissionen, welche zur Einlagerung bestimmt sind, in die Wareneingangsschleuse 30, 32, die auch gleichzeitig als Warenausgangsschleuse konstruiert sein kann, eingegeben wurde, zieht das Schiebemittel 76 die Ware 70 und/oder die Warenkommission auf die Transportfläche 68, welche in U-Form ausgebildet ist. Die Ware 70 wird derart fixiert, dass diese bei der Einlagerungsbewegung von seitlichen Rändern 106, 108 der als U-Form ausgebildeten Transportfläche 68 fixiert ist. Für den Fall, dass die Transportfläche 68 nicht als U-Form ausgebildet ist, können die Begrenzungen 106, 108 auch anders ausgebildet sein.

Am Lagerort, z.B. am Fach 52 angekommen, schiebt das Schiebemittel 76 die Ware 70 von der Transportfläche 68 in das Fach 52 des Regals 50.

Beim Auslagervorgang zieht das Schiebemittel 76 die Ware 70 auf die Transportfläche 68 und platziert diese an der gegenüberliegenden Begrenzung, welche ebenfalls als U-Form ausgebildet sein kann. Sodann wird die Ware 70 zur Warenausgangs- und/oder Wareneingangsschleuse 30, 32 transportiert, wo die Ware 70 durch das Schiebemittel 76 in die Schleuse 30, 32, welche auch ein Förderband aufweisen kann, ausgeschoben wird.

Das Schiebemittel 76, welches die Ware 70 heranzieht bzw. verschiebt, kann durch unterschiedlich Weise, beispielsweise durch Achsen oder Schienen 98, 100 bzw. 116, 118, welche in Form von Linearantrieben 84 bzw. 114 ausgebildet sind, oder von einem gelenkigen Roboterarm angetrieben und gesteuert werden.

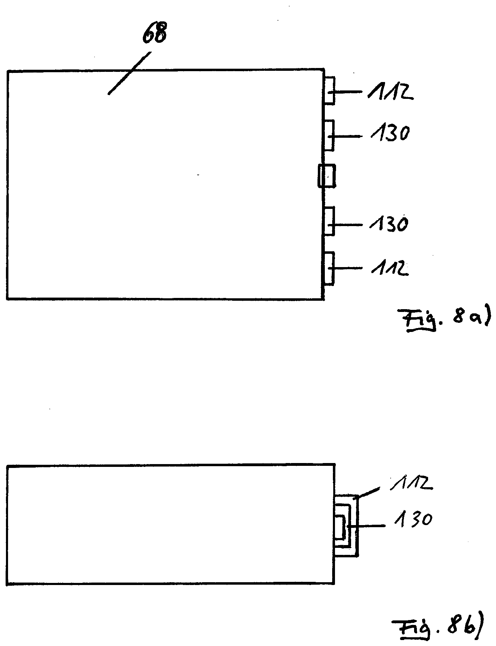

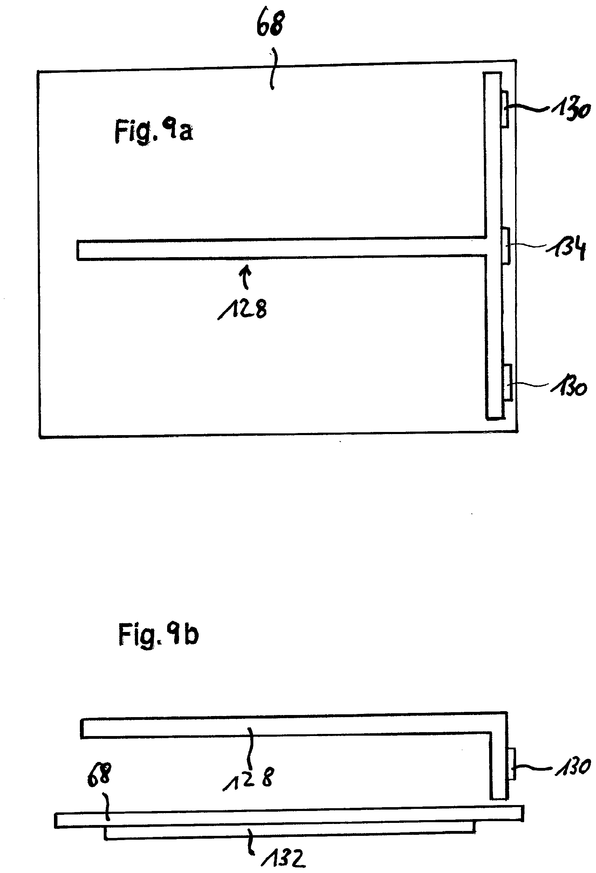

Fig. 8) und Fig. 9) zeigen eine weitere Ausführungsformen eines Schiebe- und/oder Zugmittels 128. Diese Ausführungsform zeichnet sich dadurch aus, dass das Schiebe-und/oder Zugmittel eine elektromagnetische Vorrichtung 130, wie Elektromagnet, aufweist, wodurch die magnetische oder ferromagnetische Bereiche aufweisende Ware oder eine Warenkommission oder eine die Ware aufnehmende magnetische oder ferromagnetische Verpackung beim Verschieben oder Heranziehen fixierbar ist.

Bei dieser Ausführungsform ist des Weiteren vorgesehen, dass die Transportfläche 68, welche die Ware und/oder Warenkommission transportiert, eine elektromagnetische Vorrichtung 132, wie Elektromagnet, aufweist, wodurch die Ware und/oder die Warenkommission beim Transportieren fixiert wird.

Die dargestellte Ausführungsform zeichnet sich des Weiteren dadurch aus, dass das Schiebe- und/oder Zugmittel eine Erkennungsvorrichtung 134, wie Kamera, aufweist, wodurch die Position der Ware und/oder Warenkommission vor dem Verschieben oder Heranziehen erkannt wird und das Schiebemittel und/oder Zugmittel sich so genau automatisch positionieren kann, um die Ware und/oder Warenkommission sicher zu bewegen.

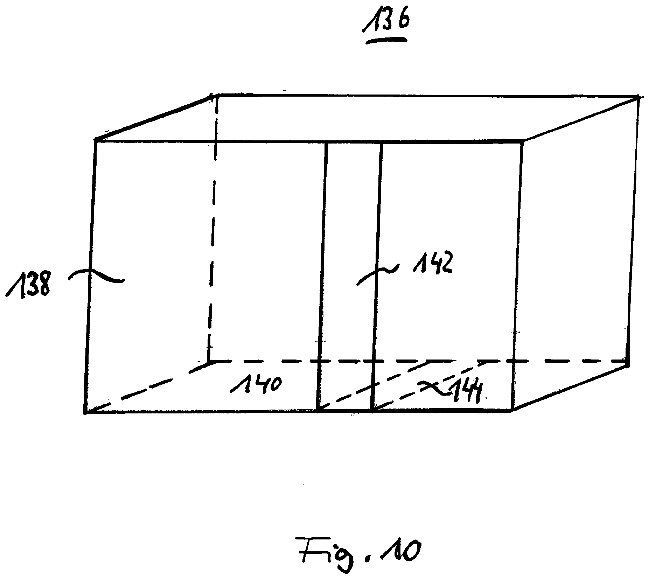

Fig. 10 zeigt eine erste erfindungsgemäße Verpackung 136 zur Aufnahme von Waren und/oder Warenkommissionen, wobei an Verpackungsabschnitten 138, 140, an welchen die Verpackung Kontakt mit den elektromagnetischen Vorrichtungen 130 des Schiebe-und/oder Zugmittels 128 sowie Kontakt mit der elektromagnetischen Vorrichtung 132 der Transportfläche 68 hat, eine dünne Schicht 142, 144 aus magnetischem oder ferromagnetischem Material, wie Metallfilm, eingearbeitet ist.

Der Metallfilm wird durch den am Schiebe- und/oder Zugmittel 128 und/oder der Transportfläche 68 befindlichem Elektromagneten 130, 132 herangezogen und so fixiert, damit die Ware und/oder Warenkommission schnell und sicher bewegt werden kann.

Damit die Waren und/oder Warenkommissionen sicher bewegt werden können, ist am oder im Schiebe- und/oder Zugmittel zusätzlich eine Kamera 134 angebracht oder integriert, mit welcher das Schiebe- und/oder Zugmittel automatisch die beste Position anfahren kann, um die Waren und/oder Warenkommissionen optimal zu fixieren.

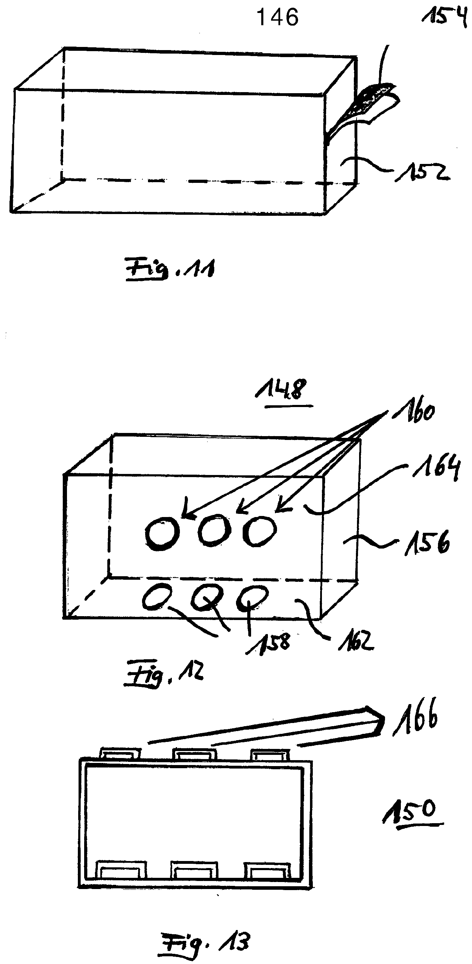

Die Fig. 11 bis 13 zeigen weitere Ausführungsformen von magnetischen Verpackungen 146, 148, 150, die in unterschiedlichen Formaten und Größen ausgebildet sind.

Die Verpackung 146 ist aus einem Verbundstoff 152 mit einer Einlage 154 mindestens eines magnetischen oder ferromagnetischen Materials ausgebildet. Der Verbundstoff 152 umfasst mindestens einen Stoff aus einem Material in Form eines teil oder ganzflächigen Filmes, oder teil oder ganzflächigen Netzgeflechtes mit magnetischen oder ferromagnetischen Eigenschaften.

Fig. 12 zeigt die Verpackung 148 aus einem unmagnetischen Grundstoff 156, versehen mit Elementen 158, 160 eines magnetischen oder ferromagnetischen Materials. Diese Ausführung ist besonders ressourcenschonend. Bei der Verpackung 148 sind ein oder mehrere Materialien 158 mit magnetischen oder ferromagnetischen Eigenschaften, z.B. an einer Innen- bzw. Unterseite 162 und/oder an einer Außenseite 164 bestückt und/oder in einer besonderen Ausführung mit einem solchen magnetischen Material verklebt oder durch eine andere Art fixiert.

Fig. 13 zeigt die Verpackung 150, welche mit einem oder mehreren Material/ien 166 mit magnetischen oder ferromagnetischen Eigenschaften, bestehend aus Einweg- oder Mehrwegchips oder aus Münzen des Zahlungsverkehrs, innen- und/oder außenseitig bestückt ist. Bei einer besonderen Ausführung mit einem solchen magnetischen oder ferromagnetischen Material, bestehend aus magnetischen oder ferromagnetischen Chips oder Münzen des Zahlungsverkehrs, können diese verklebt oder durch eine andere Art fixiert oder in Aufnahmen sein.

Das Lagersystem 44 kann sowohl mit eine Schleuse 30, 32, welche sowohl als Ein- als auch als Auslagerungsschleuse, als auch mit mindestens einer oder mehreren separaten Einlagerungs- und einer oder mehreren separaten Auslagerungsschleusen konstruiert sein.

Durch die beschriebene Erfindung wird ermöglicht, dass durch den Einsatz von Mitteln mit technisch sehr geringem Aufwand, Ware 70 und/oder Warenkommissionen unterschiedlicher Größen und Gewichten, mit sehr hoher Geschwindigkeit sowohl ein- als auch um- und ausgelagert werden können.

Außerdem wird mit technisch sehr geringem Aufwand erreicht, dass dadurch, dass Waren 70 oder Warenkommissionen unterschiedlicher Größe nicht gegriffen, oder durch Unterdruck angesaugt werden müssen, auf technisch aufwendige Schubladensysteme verzichtet werden kann und gleichzeitig eine sehr hohe Ausnutzung des Lagerraums erreicht wird.

Wird das Lagersystem nicht nur mit einer Schleuse konstruiert, welche gleichzeitig als Ein- und Ausgangsschleuse dient, sondern mit mindestens einer oder mehreren Einlagerungsschleusen oder einer oder mehreren Auslagerungsschleusen konstruiert und ausgestattet, wird der Vorteil erreicht, dass die Handlingseinheit, sowohl für den Waren-und/oder Warenkommissionsabnehmer tätig sein kann und gleichzeitig Waren und/oder Warenkommissionen in das System durch die separate oder die separaten Wareneingangsschleusen eingegeben werden kann/können, welche die Handlingseinheit dann zu einem späteren Zeitpunkt zum Lagerort transportiert.

### 2.4.4 Verpackung:

Um eine störungsfreie Arbeit des Lagerroboters zu erreichen, ist es vorzugsweise notwendig, dass alle im Depot 10, 12 eingelagerten Waren bzw. Artikel und Kommissionen in Verpackungen, wie Faltkartons, gemäß der Erfindung verpackt sind.

Aus hygienischen Gründen ist es ratsam, dass die Ware in den Faltkartons zusätzlich in Siegelschalen oder Folienbeuteln verschweißt verpackt werden. Somit ist der Geruchs- und Geschmacksübertrag verschiedener Waren, wie z.B. Fisch, Käse, Fleisch und feinen Patisserie Produkten ausgeschlossen, was dem SD somit das Angebot einer sehr großen Produktvielfalt ermöglicht.

### 2.5 Interne Hardware:

### 2.5.1 Rechner:

Die Rechenleistung übernehmen pro Depot 10 vorzugsweise zwei dem IP65 Schutzstandard entsprechende Recheneinheiten 128, wie Industrie PC's. Ein erster PC übernimmt die geforderte Rechenarbeit, auf einem zweiten PC werden sämtliche Rechenvorgänge zur Datensicherung gespiegelt gespeichert. Kommt es zum Ausfall des ersten PC's übernimmt dieser PC dann die Rechenarbeit.

### 2.5.2 Server:

Je Depot werden, wie bei den Rechnern, zwei IP65 geschützte Server 56 installiert. Ein Server auf den verschiedene Systeme zugreifen können und ein Server, auf welchen die Daten gespiegelt zur Verfügung stehen und welcher dann im Falle einer Serverstörung dessen Arbeit übernimmt.

### 2.6 Überwachungskameras:

Um die Gefahr durch Vandalismus einzudämmen, wird das Depot fakultativ an verschiedenen Stellen, sowohl um sowie im Depot videoüberwacht.

### 2.7 Stromzähler:

Um im Falle eines nicht eigenen Stromanschlusses oder einer Nutzung durch mehrere Akteure, eine genaue Abrechnung der Betriebskosten des SD's zu gewährleisten, wird das SD wahlweise mit einem eigenem Stromzähler ausgestattet.

### 2.8 Internetanschluss:

Je nachdem in welcher Region das SD eingesetzt wird, sind erwartungsgemäß unterschiedliche Datenübertragungsraten verfügbar.

Um ein störungsfreies Arbeiten des SD's zu gewährleisten, wird es wahlweise mit einem Telefonfestanschluss und/oder einem Funkanschluss für die Verbindung des SD's mit dem Internet ausgestattet.

### 2.9 Notstromversorgung:

Um durch Spannungsverlust zu erwartende Schäden bestmöglich zu vermeiden, wird das SD mit ständig geladenen Notfallakkus ausgestattet. Ihre Kapazität ist dafür ausgelegt, um
A) Notfallprocerde, wie Pkt. 4.6.1 beschrieben, zu ermöglichen, sowie
B) längstmöglich die Kühlfunktion des SD aufrecht zu erhalten.

### 3.Externe Hardware:

### 3.1 Kommissionsterminal stationär:

Seitens der Depotsoftware wird hier, um möglicherweise bereits vorhandene betriebseigene Hardware, wie z.B. moderne Ladenwaagen Kassenverbundsysteme, nutzen zu können, gemäß einem eigenständigen Erfindungsgedanken eine Datenschnittstelle, welche sich an marktführenden Anbietern, wie bspw. Bizerba, Mettler Toledo oder Berkel anpasst, installiert.

Das komplette Kommissionsterminal, bei nicht vorhandener teilweisen kompatiblen Hardware zur Kommission, besteht aus einem Bediendisplay mit angeschlossenem oder integriertem internetfähigem PC, je nach Sortiment des Akteurs, eine an den PC gekoppelte Waage, ein Drucker an dem Lieferscheine gedruckt und ein Labelwriter, an welchem Codes für den Versand gedruckt werden.

Je nach geplantem Aufstellungsort, wird das Kommissionsterminal auch in Feucht- und Kühlraum geeigneter Ausführung IP-65 Standard entsprechend, angeboten und geliefert.

### 3.2 Kommissionsterminal mobil:

Das mobile Kommissionsterminal ist seitens der Funktionen identisch mit dem des stationären Terminals, siehe Pos. 3.1, allerdings befinden sich hierbei alle Komponenten in einem transportablen Gehäuse. Die Komponenten sind hierbei auch optional in IP 65 geschützter Ausführung und mit einem mobilen Internetzugang ausgestattet erhältlich.

Interessant könnte ein solches Terminal für Akteure sein, die beispielsweise parallel zum Wochenmarktgeschäft, oder einem von Haus zu Haus Liefergeschäft, mobil Waren für die spätere Abgabe ans Depot vorbereiten möchten.

### 3.3 Stationäres Fingerprint Lesegerät:

Entscheidet sich der Akteur dafür, seinen Kunden die Möglichkeit zur Verifizierung zu bieten, ist es hiermit nicht nur am Depot, sondern erfindungsgemäß auch im Hauptgeschäft oder einer Filiale möglich, einmalig den Fingerabdruck der Personen, die sich später am Depot unkompliziert verifizieren möchten, einzuscannen und im System zu speichern.

### 3.4 Gerät mit installierter Applikation zur mobilen Kommunikation mit dem Depot:

Internetfähiges mobiles Daten Erfassungsgerät MDE, Tablet PC oder Smartphone, mit dem der Akteur jederzeit in der Lage ist, mobil mit dem Depot mobil zu kommunizieren.

### 4. Software:

### 4.1 Softwarefunktionen für den Consumer:

Eine Erfindung mit eigenständigem Charakter bezieht sich auf ein Vertriebssystem mit Warendepot.

### 4.1.1 Homepage "www.Schlemmerdepot.de":

Diese Homepage dient dazu, dass der Kunde sich zum einen über die Funktionen des SD informieren und das oder die für ihn erreich- und nutzbaren SD's finden kann.

Gelangt man auf diese Homepage, trifft man hier auf Daniel.

Anders als bei üblichen Homepages ist hier geplant, dass der Kunde sich seine Informationen zwar auch erlesen kann, aber sich aber auch abhängig von der zur verfügbaren Datenübertragungsrate, ähnlich wie bei einem modernen Videospiel, durch eine animierte Figur über die Möglichkeiten die ihm das SD bietet, aufklären zu lassen.

Über den SD Finder, hat der Kunde die Möglichkeit, dass für ihn nächstgelegene Schlemmerdepot zu finden. Dies geschieht sowohl über die Kartendarstellung, als auch über die Suche nach Postleitzahlen, sowie die Umkreissuche.

### 4.1.2 SD Marketplace eines jeden Depot's:

Ruft er nun das Depot auf, so gelangt er direkt auf den Depot eigenen Server!

Das Depot ist mobil autark und ohne fremden Server an anderen Orten stationiert nutzbar!

Hier auf der Homepage des SD's gelangt der Kunde auf den, je nach verfügbaren Datenübertragungsvolumen und Akteurswunsch, virtuellen Marketplace.

Das SD ist so ausgestattet, dass zwar auch nur einem Akteur, aber auch mehreren Akteuren die Nutzung bietet.

Der Kunde hat nun die Möglichkeit, den Onlineshop eines angeschlossenen Akteurs, oder die SD Markethall (siehe Punkt 4.1.2.2) zu öffnen

### 4.1.2.1 Der Einkauf im SD Onlineshop eines Akteurs:

Im Onlineshop des Akteurs hat der Kunde nun die Möglichkeit,
A) eine individuelle Bestellung vorzunehmen, oder
B) einen Einkauf aus dem Vorratskühl- bzw. Vorratstiefkühlschrank des Akteurs zu tätigen.

### A)

### Individuelle Bestellung:

Über eine bidirektionale Schnittstelle hat der Akteur hier die Möglichkeit, eine Datenbank seines Lagerbestandes, mit dem Onlineshop zu koppeln, um dem Kunden verbindlich Waren anbieten zu können, oder er hat ohne die Nutzung dieser Funktion die Möglichkeit, dem Kunden Waren freibleibend, je nach Verfügbarkeit, anzubieten. In diesem Fall kann er dem Kunden die Möglichkeit geben, Alternativen seitens des Akteurs zuzulassen, für den Fall, dass ein gewünschter Artikel, wie bspw. ein bestimmtes Fleischteil, nicht, ein vergleichbares Produkt jedoch beim Metzger vorrätig ist.

Gleichwohl kann der Kunde entscheiden, ob es im Falle dessen, dass ein oder mehrere Artikel der von ihm getätigten Bestellung nicht lieferbar sind, die restliche Bestellung aufrechterhalten bleibt, oder unter Benachrichtigung storniert werden soll.

Da es sich bei den gerade im Bereich Fleisch und Wurst oftmals um Kommissionen handelt, die frisch verwogen werden, hat der Kunde die Möglichkeit, dem Akteur einen Entscheidungsrahmen einzuräumen, um ihm bspw. eine 10-15 % Steigerung der Liefermenge ohne extra Bestätigung erlaubt.

Lieferoptionen der individuellen Bestellung:
Der Akteur legt fest, welche der möglichen Liefervarianten er anbietet:
1. Versand auf dem Post oder Speditionsweg
2. Abholung im Hauptgeschäft oder der Filiale
3. Lieferung der Sendung durch einen betriebseigenen Heimlieferservice
4. Lieferung der Sendung an ein Schlemmerdepot

Bei Variante 2 u. 3 hat der Akteur die Möglichkeit, nach vorheriger Freigabe durch den Kunden, dessen Warensendung für den Fall, dass sie bei 2. nicht zu den Geschäftszeiten durch den Kunden abgeholt wurde, oder bei 3. der Kunde nicht zu Hause angetroffen wurde, die Warensendung alternativ für den Kunden erreichbar in einem Schlemmerdepot zu deponieren.

In diesem Fall kommt evtl. bei Nr.2 jedoch aber bei Nr.3 das MDE (mobiles Daten Erfassungsgerät siehe Punkt 3.4) zum Einsatz.

Erreicht die Sendung aus bspw. den oben genannten Gründen nicht seinen Empfänger, so kann der Akteur bzw. die durch ihn zur Lieferung autorisierte Person, mit dem MDE und der Anwendung "4.5.4 SD Slot Calculator" eine dem Platzbedarf der Sendung entsprechende Verfügbarkeit der Lagerkapazitäten in einem durch den Akteur betriebenen SD prüfen und diese im Falle der Verfügbarkeit sofort reservieren.

Das MDE generiert dann für den Fall, dass der Kunde über keinen eigenen Consumer Account, siehe Punkt 5, verfügt, einen Sendungs-Zugangscode.

Dieser Sendungs-Zugangscode sowie die prognostizierte Ankunftszeit der Sendung im Depot wird dem Kunden dann wahlweise per SMS, E-Mail oder Postwurfsendung zugestellt.

Mit diesem Zugangscode oder dem Consumer Account hat der Kunde bei den Punkten 2.,3. und 4. die Möglichkeit, seine Warensendung am SD in Empfang zu nehmen.

### B)

Einkauf aus dem Vorratskühl- bzw. Vorratstiefkühlschrank:
Bei diesem Einkauf handelt es sich um Waren, die der Akteur bereits im SD für den direkten Verkauf an den Endkunden bestimmt und deponiert hat.

Anders als bei der individuellen Bestellung, hat der Kunde hier auch die Möglichkeit direkt am SD aus den im SD zur Verfügung stehenden Waren zu wählen, sie zu kaufen und direkt in Empfang zu nehmen.

### 4.1.2.2 SD Markethall:

In der SD Markethall, erhält der Kunde einen Gesamtüberblick über
A) alle sich im Depot befindlichen Artikel, aller Akteure, welche aus deren Vorratskühl- bzw. Vorratstiefkühlschränken zum direkten Kauf angeboten werden.
B) alle Waren, die durch individuelle Bestellungen durch die dem SD angeschlossenen Akteure lieferbar sind.

### 4.1.2.3 SD Order Just in Sequence Delivery and Take off:

Beim "SD Order Just in Sequence Delivery and Take off" handelt es sich um eine Modalität, bei welcher der verbindliche Kaufvertrag zwischen Kunden und Akteur nach Anfrage des Kunden um einen genauen Liefertermin und verbindlicher Bestätigung dessen durch den Akteur zustande kommt.

Je nach den AGB's des Akteurs zu diesem Model, ist es z.B. möglich, dass, sollte der Akteur nicht rechtzeitig liefern, dem Kunden ein bestimmter Geldbetrag, Festbetrag oder prozentual entsprechend des Auftragswertes, gutgeschrieben oder erstattet wird, oder sollte der Kunde die Lieferung nicht rechtzeitig abholen, diese ihm zwar, ganz, nur teilweise oder auch durch entstehende Entsorgungskosten, je nach Vereinbarung, mit Aufpreis, berechnet wird, die Ware jedoch wieder in den Besitz des Akteurs kommt oder im Besitz bleibt und ihm diese, zur weiteren Verfügung, wie bspw. in Punkt 4.1.2.3 SD Discount Shop beschrieben, steht.

Interessant ist diese Modalität, bspw. für Kunden, bei welchen sich das SD auf einer Wegstrecke, wie z.B. dem Weg nach Hause, oder zur Arbeit befindet, sie aber am Depot keine Wartezeiten in Kauf nehmen möchten.

Erreicht die Lieferung das Depot, wird der Kunde per Mail informiert. Geschieht dies bis zur vereinbarten Zeit wird die Ware berechnet. Kann der Kunde sie abholen, kann er sie unter finanziellen Einbußen, weiter in den freien Verkauf geben.

Beim Nutzen dieser Modalität, empfiehlt es sich aus Gründen der Anonymität und des Datenschutzes in Bezug auf den ursprünglichen Kunden, den Lieferschein bzw. die Rechnung nicht der Warenkommission direkt beizufügen, sondern diese erst bei Abholung durch den bei Punkt 2.3.6 beschriebenen Belegdrucker auszustellen.

### 4.1.2.4 SD Discount Shop:

Im SD Discount Shop werden Waren "preisreduziert" oder "gratis" angeboten, die qualitativ einwandfrei sind, sich jedoch nahe am Mindesthaltbarkeitsdatum (MHD) befinden.

Dies können Waren aus den Vorratskühl- bzw. Vorratstiefkühlschränken sein, welche nicht abverkauft wurden, aber auch individuelle Bestellungen, welche gekauft, jedoch nicht durch Ihren Empfänger abgeholt wurden und im Sinne der Allgemeinen Geschäftsbedingungen nun zum weiteren Verkauf freigegeben werden, oder Kommissionen, die siehe unter Pkt. 4.1.2.3, durch den Akteur nicht entsprechend der vereinbarten Zeit geliefert wurden und diese nun nicht durch den Kunden angenommen werden.

### 4.2 Vergabe der Kundennummern:

Um die Anwendung bestimmter Funktionen zu ermöglichen, wird, unabhängig davon, bei welchem oder wie vielen dem SD angeschlossenen Akteur/en eine Person Kunde sein möchte, die Vergabe der Kundennummern vom SD übernommen.

### 4.2.1 SD Kunden Stammdaten:

In den Stammdaten macht der Kunde Angaben über die gewünschte Rechnungsanschrift, die Lieferanschrift im Falle der Nutzung des Heimlieferservice und der, sollten in einem bestimmten Umkreis ein od. mehrere weiteres/weitere SD's verfügbar sein, evtl. alternativ zur Lieferung akzeptierte SD's und wenn ja, welche Priorisierung, in welcher Reihenfolge gewünscht ist, gibt seine E-Mail Adresse, sowie die Telefonnummer zur Erreichbarkeit an. Mit diesen Daten wird für den Kunden eine Visitenkarte erstellt, die sobald der Kunde bei einem Akteur eine Bestellung machen möchte, von dessen Akteursaccount gezogen.

### 4.3 Consumer Account:

### 4.3.1 Consumer Bilanz:

Neben den Angaben die der Kunde bei 4.2.1 SD Kunden Stammdaten gemacht hat, erhält der Kunde im Consumer Account eine vollständige Auflistung seiner Kaufaktivitäten. Er erhält eine differenzierte Auflistung aller seiner gekauften und bereits bezahlten Waren, sowie eine genaue Auflistung seiner noch bestehender Verbindlichkeiten.

### 4.3.2 Family and Care Account:

Das Familienkonto beim Schlemmerdepot.

Hierbei können bspw. Ehe- oder Lebenspartner einen Account gemeinsam nutzen.

Außerdem ist es hierbei auch möglich, ihren Kindern oder anderen Dritten, dies können bspw. Patenkinder oder auch Menschen sein, welche sich bspw. in wirtschaftlich od. sozial schwierigen Umständen befinden und für die der Accountinhaber sorgen möchte, ein Budget einzurichten über welches diese dann beim Einkauf im SD selbständig verfügen können.

Der Account Chief kann für jeden einzelnen durch ihn autorisierten Mitbenutzer seines Accounts, zum einen eine sehr detaillierte Budgetierung festlegen, bspw. einzelne Tages-, Wochen-, oder Monatsbudgets, die sich bei Nichtausschöpfung addieren oder verfallen, zum anderen aber auch durch sperren bestimmter Artikel, festlegen, welche Waren durch den Mitbenutzer selbständig erworben werden dürfen.

Der durch den Accountinhaber autorisierte Mitbenutzer hat in dem Fall, dass der Account Chief eine Vorauswahl, der durch den Mitbenutzer zu erwerbenden Waren getroffen hat, dann auch in seinen persönlich nutzbaren SD Applikationen nur dieses Angebot sichtbar. Dies ist insbesondere dann wichtig, wenn bspw. Eltern Einfluss auf die Ernährung Ihrer Kinder nehmen möchten.

Somit können Kinder dann bspw. selbständig eine Auswahl darüber treffen, welche Schulbrote sie auf dem Schulweg am Depot abholen möchten, oder welche durch einen Akteur frisch zubereiteten Convenience Artikel, sie dann nach der Schule am SD abholen möchten.

Der Account Chief erhält, wenn gewünscht, über sämtliche seinen Account betreffenden Vorgänge Nachricht.

Mit dieser Funktion haben Eltern bspw. die Möglichkeit ihren Kindern auch in deren Abwesenheit, eine qualitativ hochwertige, bargeldlose, Versorgung mit Lebensmitteln zu ermöglichen.

### 4.3.3 Forgotten Package Reminder:

Da aus Gründen der Hygiene, im Schlemmerdepot keine Waren, deren Mindesthaltbarkeitsdatum überschritten wurde deponiert sein dürfen, wird der Kunde durch den 4.3.3 Forgotten Package Reminder vor dem Ablauf des MHD's seiner gekauften aber noch nicht in Empfang genommenen und noch im SD deponierten Waren, um ihn vor Verlust dieser zu schützen, auf diese explizit hingewiesen.

### 4.3.4 SD Ordertrack

SD Ordertrack ist eine App, die dem Kunden ermöglicht, jederzeit den Lieferstatus seiner Bestellungen einzusehen.

### 4.3.5 SD Collecting Orders:

Bei SD Collecting Orders handelt es sich um eine Funktion, bei welcher der Kunde dem Akteur mitteilen kann, dass er zu seinem geplanten Warenabholzeitpunkt noch andere Bestellungen anderer Akteure erwartet. Sowohl der Kunde als auch die Akteure, erhalten hierbei eine Auflistung der aktuellen Lieferstadien. Denkbar ist hierbei eine

Wettbewerbsfunktion zu integrieren, um den Service für den Consumer durch gesteigerten Ansporn unter den Akteuren zu optimieren.

### 4.3.6 Waren Informations App:

Dem Kunden wird seitens des SD eine Applikation zur Verfügung gestellt, in welcher er gezielt festlegen kann, über welche im Depot verfügbaren Waren er Informationen erhält. So wird er bspw. sofort darüber informiert, wenn ein Akteur einen bestimmten Artikel, welcher zuvor durch den Kunden markiert wurde, im Depot zum Verkauf eingelagert wurde.

Der Kunde kann von einzelnen Artikel, bestimmter Akteure bis hin zu allen Artikeln aller angeschlossener Akteuren eines oder mehrerer SD's informiert werden. So vermeidet der Kunde ungewünschte Informationsflut und kann sich dennoch auf die Verfügbarkeit von Waren, die er zuvor in seiner Favoritenliste festgelegt hat, hinweisen lassen.

### 4.4 Depotmanager-General Depot Manager:

Jeder einem SD's angeschlossen Akteur, definiert einen für sich dem SD gegenüber handlungsbefugten Ansprechpartner, nachfolgend "DM" oder "Depotmanager" genannt. Mit diesem DM kommuniziert das SD fortlaufend bidirektional.

Es teilt ihm vorab festgelegte Informationen per SMS und/oder E-Mail mit, gewährt ihm Einblicke in durch den Akteur festgelegte Informationen und führt Befehle, die es durch den DM erhält, aus.

Unter allen DM's wird für jedes SD ein General Depot Manager, nachfolgend GDM genannt, gewählt. Dieser GDM wird durch die Akteure gegenüber den anderen DM mit besonderen Kompetenzen ausgestattet, um als Hauptansprechpartner der DM einen reibungslosen Betrieb des Depots zu ermöglichen.

Eine evtl. zu vereinbarende Aufwandsentschädigung, die dem Akteur, welcher den GDM stellt, gutzuschreiben ist, wird automatisch dem 4.5.11.1 Betriebskostenrechner mit Splitting Funktion genannt und in diese Betriebskostenberechnung eingepflegt.

### 4.4.1 SD DM Verteiler:

Beim SD DM Verteiler, handelt es sich um eine E-Mail-Einstellung seitens des SD, die alle DM eines SD's sowie den GDM gleichzeitig zusammen informiert.

Auf bestimmte Informationen, wie bspw. eine relevante Temperaturschwankung, die auf eine Störung der Kühlung des SD hinweist, kann somit schnell allinformierend eingegangen werden.

### 4.4.2 SD DM Chatfunction:

Jedes SD wird für die DM und den GDM mit einer Chatfunktion ausgestattet. Ähnlich wie bei einem Marktbeschickertreffen, können hierbei gemeinsam beliebige Sachverhalte unter den Akteuren diskutiert werden, ohne dabei zeitaufwendige Treffen in Kauf nehmen zu müssen.

### 4.5 Akteurs Account:

### 4.5.1 Kundenverzeichnis mit Klärung des Kreditrahmens:

Möchte sich ein Kunde im Online Shop eines Akteurs als solcher registrieren, um dort eine Bestellung tätigen zu können, so fordert der Akteur bei 4.2.1 SD Kunden Stammdaten dessen Visitenkarte an. Der Akteur legt nun widerruflich und jederzeit abänderbar fest, ob und in welcher Höhe er dem Kunden einen Kreditrahmen einräumt. Diese Daten sendet der Akteur dann wiederum an das SD.

Dies ist notwendig, damit das SD bspw. bei der Vermittlung von Einkäufen des Kunden in der 4.1.2.2 SD Markethall, oder dem 4.1.2.3 SD Discount Shop über klare Anweisungen bezgl. der Freigabe der Waren verfügt. Stellt der Akteur dem Kunden keinen ausreichenden Kreditrahmen zur Verfügung, so kann der Kunde beim Einkauf in der SD Markethall sowie dem Discount Shop im Vorfeld keine Reservierung von Waren vornehmen und Waren nur gegen direkte Bezahlung in Bar oder E-Cash am Depot in Empfang nehmen.

### 4.5.2 Onlineshop des Akteuers

Wie schon bei Punkt "4.1.2.1 Der Einkauf im SD Onlineshop eines Akteurs" beschrieben, wird hier eine Schnittstelle definiert, mit welcher es möglich ist, eine Datenbank in welcher die aktuellen Lagerbestände des Akteurs beschrieben sind, mit dem Shop zu koppeln, um Warensendungen dem Consumer direkt zusagen zu können.

Wird diese Möglichkeit nicht genutzt, so hat der Akteur die Möglichkeit, Bestellungen erst nach Durchsicht zu bestätigen.

Allerdings bietet der Onlineshop dem Akteur auch die Möglichkeit, für jeden Artikel bestimmte Einzel sowie Gesamtbestellmengen in Verbindung mit bestimmten Parametern zu definieren. Somit kann der Onlineshop selbständig Warenkommissionen zusagen, welche zwar noch nicht produziert sind, dem Akteur allerdings bis zum Lieferzeitpunkt zu produzieren möglich ist.

So kann, nach zuvor getätigten Einstellungen, der Onlineshop einer Fleischerei einem Kunden bspw. Wiener Würstchen, wissend, dass diese donnerstags produziert werden, in einer durch die eigestellten Parameter begrenzten Menge für die Lieferung am Freitag oder später zusagen.

Die Summe aller bestellten Artikel werden automatisch dem 4.5.3 SD Production Assistant, die einzelnen Bestellungen dem 4.5.4 SD Slot Calculator zur weiteren Bearbeitung zur Verfügung gestellt.

Im Moment der Bestellungsaufgabe bzw. Bestätigung einer individuellen Bestellung, durch den Akteur, prognostiziert das System, unter Berücksichtigung zuvor durch den Akteur festgelegter, und durch Praxiserfahrung jederzeit abänderbarer Parameter, wie Gewicht und Größe, mindestens eine, möglicherweise jedoch auch in priorisierter Reihenfolge, zwei oder drei Verpackungsvarianten der Warensendung. Nach Anfrage bei 4.5.7 SD Paper-Case über die Verfügbarkeit der kalkulierten Verpackungsmaterialien, erstellt der Onlineshop bei 4.5.4 SD Slot Calculator eine Anfrage über die Verfügbarkeit der Lagerkapazitäten in dem vom Kunden gewünschten SD oder auch, wenn durch den Kunden durch seine Angaben in den SD Stammdaten freigestellt, "den" Schlemmerdepot's.

Erst wenn eine Lagerzusage durch den SD Slot Calculator erfolgt ist, kann den Kunden der Auftrag zugesagt werden.

Die vom SD Slot Calculator zur Verfügbarkeit bestätigte und reservierte Verpackungsvariante wird dem Auftrag hinzugefügt und dient später in der Praxis beim kommissionieren der Waren als Packstückvorgabe.

Außerdem generiert das System für jede bestätigte Bestellung einen persönlichen QR od. EAN Code, welcher ebenfalls die Ware bis zur Auslagerung begleitet und über welchen jederzeit die Historie der Kommission nachvollziehbar ist.

### 4.5.3 SD Production Assistant

SD Production Assistant ist eine Applikation, welche nach vorheriger Lernphase durch benutzerdefinierte Angaben, dem Akteur die Produktionsplanung enorm vereinfacht.

Die App kommuniziert permanent mit dem 4.5.2 Online Shop des Akteurs, sowie der Applikation 4.5.5 SD Kommission.

Sie addiert die bestellten Waren in die Produktionskalkulation und subtrahiert bereits kommissionierte Waren. Sie bietet die Möglichkeit der Führung einer Warenbestandsdatenbank, deren Angaben mit in die Produktionskalkulation eingepflegt werden.

Der Akteur hat die Möglichkeit, nicht nur die noch zu produzierenden Gesamtmengen einzelner Waren anzeigen zu lassen, sondern dies auch stufenweise innerhalb einzelner Produktionstage, bspw. "1000 noch zu produzierende bestellte Wiener, 300 bis 4.8.2013, 300 bis 5.8.2013, 400 bis 6.8.2013.

Dies erfolgt nicht nur in Text- sondern auf Wunsch auch in visueller Form als Diagramm.

Die App berechnet unter Einbeziehung von betriebseigenen Rezepturen automatisch die noch benötigten Materialmengen, welche zur Produktion der Waren notwendig sind. Auch dies geschieht in Relation zu den Terminen an welchen die Waren benötigt werden und kann in Text- als auch visueller Form erfolgen.

Auch hier besteht die Möglichkeit zur Koppelung einer Materialdatenbank, um dem Akteur nicht nur eine Auflistung der benötigten Materialmengen, welche zur Abarbeitung der bestellten Waren benötigt wird, anzeigen zu können, sondern ihm auch eine Materialeinkaufsempfehlung samt der benötigten Wert- und Inhaltsstoffe der einzelnen Waren erstellen zu können.

### 4.5.4 SD Slot Calculator

Der SD Slot Calculator organisiert, plant und führt Aufzeichnung sämtlicher SD Slot Angelegenheiten. Sowohl die des Primary- als auch der Secondary SD's eines Akteurs.

Es kommuniziert permanent mit 4.5.2 Onlineshop des Akteurs, 4.5.5 SD Kommission, 4.5.6 SD MHD Reminder Storage Assistant sowie 4.5.9 SD Slot share'n trade .

### 4.5.5 SD Kommission

Die Kommissionssoftware kommuniziert ebenfalls mit verschieden Anwendungen des SD's.

Es erhält seine Aufträge vom 4.5.2 Onlineshop des Akteurs. Der Akteur hat die Möglichkeit, seine Warenliste mit verschiedenen Kennziffern zu versehen, so dass die Kommissionssoftware selbständig Aufträge splitten und an verschiedene Kommissionsterminals senden kann, so dass in verschiedenen und auch gleichen Abteilungen, Mitarbeiter gleichzeitig und auch zeitversetzt gemeinsame Kommission abarbeiten können, welche dann im Depot gemeinsam ausgelagert und an den Kunden übergeben werden können.

So kann im Beispiel einer Metzgerei ein Mitarbeiter alle Wurstkomponenten aller Kommissionen abarbeiten, während, bevor, oder nachdem ein anderer Mitarbeiter alle Fleischkomponenten abarbeitet.

SD Kommission übernimmt den vom Onlineshop definierten Waren ID Code und generiert, wenn nötig, selbständig weitere, welche dann als der Kommission dazugehörig gespeichert werden.

SD Kommission gibt dem Mitarbeiter die vorab kalkulierten und dafür bereits im Depot reservierten Packstücke vor. Sollte sich in der Praxis ein vorgeschlagenes Packstück oder eine Packstückkombination als nicht für den Auftrag als realisierbar erweisen, so hat der Mitarbeiter die Möglichkeit andere Packstückvariationen während des Kommissionsvorganges vom 4.5.4 SD Slot Calculator prüfen zu lassen und falls möglich zu verändern.

### 4.5.5 SD Kommission meldet verbrauchte Packstücke sofort an 4.5.7 SD Paper-Case.

Es besteht die Möglichkeit, die Einstellungen so vorzunehmen, dass 4.5.5 SD Kommission entweder die kommissionierten Artikel Waren in einem gemeinsamen Lieferschein am Ende des Kommissionsvorgang zusammenfasst, allerdings kann das System auch eine Bestellung in verschiedene zusammengehörige oder getrennt gehandelte Lieferscheine splitten. Dies ist insbesondere dann von Vorteil, wenn zwischen einzelner Abteilungen im Betrieb eines Akteurs eine genaue buchhalterische Trennung gewünscht oder notwendig ist.

Der od. die Lieferschein/e kann/können nur gedruckt, aber auch nach Fertigstellung des Kommissionsvorganges per E-Mail an den Kunden gesendet werden.

Sollten einzelne Artikel einer Bestellung nicht lieferbar gewesen sein, so sendet das System automatisch eine Nachricht an den Kunden, damit dieser informiert ist und frühzeitig in der Lage ist gegebenenfalls Ersatz für die fehlenden Waren zu beschaffen.

Gleichwohl erstellt die Software hier ein Bookmark, welches für die Funktion 4.3.4 SD Ordertrack dem Tracken der Bestellung notwendig ist.

### 4.5.6 SD MHD Reminder and Storage Assistant

Jede Warenkommission erhält ein Mindesthaltbarkeitsdatum, welches sich nach dem am kürzesten haltbaren Artikel in der Kommission richtet.

Während das SD, wie bei 4.3.3 Forgotten Package Reminder beschrieben, den Kunden an seine Waren erinnert, wird beim SD MHD Reminder and Storage Assistant der Akteur auf die sich noch im Depot befindlichen, jedoch kurz vor dem Verfallsdatum stehenden Artikel hingewiesen.

Beim Depot mit Tiefkühlvariante besteht die Möglichkeit, dass der Lagerroboter nach zuvor festgelegten Verfahrensschritten automatisch, oder auf Anweisung des DM, Artikel die im Frischesortiment auf Vorrat angeboten wurden, dann in den Tiefkühlbereich umlagert.

Geschieht dies, orientiert sich der SD MHD Reminder and Storage Assistant nun am neuen Tiefkühl MHD und ändert automatisch den Status der Sendung im Onlineshop des Akteurs sowie der Markethall.

Durch den 4.5.6 SD MHD Reminder and Storage Assistant, erhält der Akteur permanent die Möglichkeit sich Bericht über den Gesamtstatus seiner SD Aktivitäten erstatten zu lassen. -Wie hoch ist der Warenwert, der eigenen sich noch im Depot befindlichen Waren? Welche sind davon bereits verkauft? Welche befinden sich im freien Verkauf? Wie hoch war, bzw. ist die Lagerplatzauslastung? etc.

### 4.5.7 SD Paper-Case:

Mit der Applikation SD Paper Case, nachfolgend SDPC genannt, hat der Akteur in seinem Akteurs-Account, auf dem Server des Schlemmerdepot's, die Möglichkeit, das Layout und die Gestaltung seiner Verpackungen nach seinen eigenen Wünschen und Vorstellungen zu entwerfen.

Er wählt aus einer Liste Faltkartons bzw. Verpackungen unterschiedlicher Größen und Formaten die für ihn optimalen Kartons aus, bekommt ein Grundlayout, sowie das Logo des Schlemmerdepot's vorgeschlagen, kann das Layout verändern, eigene Texte einfügen, die Entwürfe und Vorlagen dort speichern und nach dem Fertigstellen des Layouts, die Verpackungen direkt beim Hersteller bestellen.

SDPC überwacht den Bestand der Verpackungsmittel.

SD Paper-Case: Sobald beim Kommisionsvorgang eine Verpackung als benutzt registriert wird, wird diese Information an die App gesendet und SDPC subtrahiert dieses Packstück vom Bestand.

Der Akteur legt, sobald er seinen Verpackungs-Erstbestand im SDPC definiert, für jedes Packstück einen Mindestlagervorrat fest. Wird dieser beim Kommissioniervorgang unterschritten, meldet dies SDPC den DM und schlägt die Bestellung des jeweiligen Packstückes in einer zuvor ebenfalls durch den Akteur grundhaft definierten Menge vor. Der DM hat die Möglichkeit, die Bestellmenge zu verändern oder nicht. Bestätigt er den Bestellvorschlag der App, werden die Packstücke automatisch gemäß den zuvor definierten Konditionen beim Hersteller bestellt.

Hierbei generiert SDPC einen sendungsspezifischen QR oder EAN Code, welcher mit dem Auftrag an den Hersteller gesendet wird und diesen bis zum Eintreffen der Ware in den Akteursbetrieb begleitet.

Erreicht die Warensendung nun den Akteursbetrieb, und wird der Code am Kommissionterminal gescannt, registriert SDPC die Art der Packstücke sowie die Anzahl dieser als Bestandszugang und addiert diese in der jeweiligen Bestandsliste des einzelnen Packstückes.

SDPC vergleicht den Verbrauch der Packstücke periodengerecht mit dem der Vorjahre und schlägt im Falle dessen, dass ein allgemein erhöhter Verbrauch verzeichnet wird, aber auch ein temporär gesteigerter Mehrverbrauch durch saisonbedingten Mehrbedarf, wie bspw. an Weihnachten zu erwarten ist, dem DM eine erhöhte Bestellmenge der Packstücke vor.

### 4.5.8 SD Flyer-Store:

Ähnlich wie der bei Punkt beschriebenen Funktion des Depot Paper Case, bekommt der Akteur beim Schlemmerdepot Flyer-Store die Möglichkeit, dieses Programm auf dem Server des Schlemmerdepot in seinem Akteurs Account aufzurufen, hier Vorlagen zu nutzen, Werbemittel, wie Flyer, Broschüren, Plakate, Banner etc. mit eigenen Texten, sowie Bilder und Logos zu gestalten und diese direkt beim Hersteller zu bestellen.

### 4.5.9 SD Slot share n'trade

Jeder Akteur eines Depot's hat die Möglichkeit, Handel mit seinen Lagerressourcen zu betreiben.

Handel kann beim "Depot Slot Trade" unter den sich zum Handel bereit erklärenden Akteuren eines Depot's, beim "Global Depot Slot Trade" aber auch den Akteuren unterschiedlicher Depot's stattfinden.

Jeder Akteur, der sich zum Handel seiner Lagerplätze bereit erklärt, legt flexibel fest, wie viel Prozent seiner "nicht belegten oder reservierten" Lagerplätze er der Slot Börse, dem Handel mit Lagerplätzen", zu welchen Konditionen zur Verfügung stellt.

Gleichzeitig definiert der Akteur, nach welchen Prioritäten der Einkauf von benötigten Lagerkapazitäten vonstatten gehen soll. Sollen freie Lagerkapazitäten gezielt von befreundeten Akteuren eigekauft werden? Richtet sich der Einkauf nach dem besten Preis?, etc.

Sollten SD Slot share n'trade, durch die Akteure keine dem Markt zur freien Vergabe stehenden SD Slots zur Verfügung stehen, es aber dennoch freie Kapazitäten bei angeschlossenen Akteuren erkennen, so fragt das System über die DM der Akteure, welche über freie Slot Ressourcen, nach diesen an und vergibt diese nach besonderer Freigabe.

4.5.9 SD Slot share n'trade dokumentiert alle Bewegungen und Vergaben von Depot Slots und erstellt jedem Akteur nach zuvor eingestellter zeitlicher Parameter, für jeden seiner Handeltreibenden Akteure Forderungen gegenüber anderen Akteuren und leitet diese zum Zweck der Abwicklung an 4.5.11 SD Finance weiter.

### 4.5.10 SD Schnittstellen

Im System des SD werden Akteur-spezifisch an verschiedenen Punkten Schnittstellen definiert, um die Einflechtung in vorhandene betriebliche Systeme und die Nutzung dieser zu ermöglichen.

Somit können bspw. betriebseigene Waagen und Warenwirtschaftssysteme sowie Finanzbuchhaltungssysteme, kurz FiBu, mit dem System des SD's verbunden und genutzt werden.

### 4.5.11 SD Finance

Alle Finanzforderungen, die im Rahmen des Betriebes des SD's entstehen, werden zum Zwecke der Zuordbarkeit mit einem spezifischen Zahlungscode versehen.

### 4.5.11.1 Betriebskostenrechner mit Splitting Funktion:

Alle Kosten, welche durch das Betreiben des Schlemmerdepots entstehen, Leasingraten, Finanzierung, Stromkosten, Stellplatzpacht, Stellplatzfinanzierung, Wartungskosten, Aufwandsentschädigungen des GDM und dergleichen, werden bei dieser Funktion summiert und nach einem zuvor festgelegten Verteilungsschlüssel auf die einzelnen verteilt.

Die hierdurch entstehenden Forderungen, sowie die Kontoführung, werden durch den GDM verwaltet und realisiert.

Der GDM hat im Falle dessen, dass von der Funktion 4.5.11.5 SD Finance Professional Gebrauch gemacht wird, die Möglichkeit, dieser automatisiert die entstehenden Forderungen zu übertragen und durch diese Funktion realisieren zu lassen.

Die angeschlossenen Akteure werden über die Abrechnung sowie die Kontobewegungen dieser Funktion, je nach Einstellung dieser Funktion, sofort nach jeder Kontobewegung oder in bestimmten periodischen Abständen durch den 4.4.1 SD DM Verteiler in Kenntnis gesetzt.

### 4.5.11.2 Cash Money:

Die Bargeldfunktion am Zahlungsterminal wird durch den GDM oder automatisiert durch die Funktion "4.5.11.5.1 Cash Money pro" betrieben.

Wird von dieser Funktion kein Gebrauch gemacht, pflegt der GDM den Wechselgeldbestand sowie die eingegangen Bargelder des SD's.

Ihm wird seitens des Systems automatisch die Finanzverteilung des Geldes übermittelt und er veranlasst die Verteilung der finanziellen Mittel nach diesem Schlüssel.

### 4.5.11.3 Akteur Forderungen:

Das System erstellt dem Akteur eine Auflistung über alle Forderungen samt der dazugehörigen spezifischen Zahlungscodes, und den zur Abwicklung relevanten Daten, zu den von ihm auch durch das SD übergebenen gelieferten Waren.

### 4.5.11.3.1 Offene Posten Liste:

Alle in der Funktion 4.5.11.3 Akteur Forderungen vom System definierten Forderungen des Akteurs, werden automatisch in dessen "Offene Posten Liste" eingefügt.

Diese offene Posten Liste wird seitens des Akteurs, oder aber beim Nutzen der Funktion 4.5.11.5 SD Finance Professional, durch diese und deren angegliederten Funktionen gepflegt.

### 4.5.11.4 SD Bilanz:

4.5.11 SD Bilanz kommuniziert, sobald vom Akteur gefordert, mit 4.5.6 SD MHD Reminder and Storage Assistant, um eine Aufstellung der befindlichen Warenwerte des Akteurs im Depot zu erhalten sowie mit allen relevanten Funktionen von 4.5.12 SD Finance, um eine Aufstellung des Geldflusses, der Verbindlichkeiten sowie der Forderungen des angeschlossenen Akteur's zu erhalten.

Diese Auflistung, welche gleichzeitig eine Inventurauflistung beinhaltet, wird dem Akteur zur Übersicht bereitgestellt.

Außerdem wird ein Datensatz, mit diesen Informationen als Inhalt, im zuvor definierten Format, bspw. DATEV, XML, oder CSV, generiert, welcher dann durch den Akteur in seine Finanzbuchhaltungssoftware eingepflegt werden kann.

### 4.5.11.5 SD Finance Professional:

### 4.5.11.5.1 Cash Money pro:

Diese Funktion pflegt vollautomatisiert die Bargeldbewegungen des SD's.

Beim Nutzen dieser Funktion wird mit einem Bargelddienstleister sowie einem allgemeinem Finanzdienstleister ein Vertragsverhältnis eingegangen. Nach zuvor vereinbarten Parametern, pflegt der Bargelddienstleister den Wechselgeldbestand des SD's, entnimmt diesem die eingegangenen Bargelder und zahlt diese auf ein bestimmtes Konto des Finanzdienstleisters ein, welcher danach anhand des ihm vom System übermittelten Verteilungsschlüssel, diese dann an die einzelnen Akteure verteilt.

Dem Akteur werden vom System automatisch die finanzbuchhalterisch relevanten Daten der eingegangenen Zahlungen übermittelt und in die Funktion 4.5.11.4 SD Bilanz eingepflegt.

### 4.5.11.5.2 SD Inkasso:

Beim Nutzen der Funktion 4.5.11.5.2 SD Inkasso hat der Akteur die Möglichkeit mit einem Finanzdienstleister ein Geschäftsverhältnis einzugehen.

In diesem Falle werden dem Finanzdienstleister alle im Punkt "4.5.11.3 Akteur Forderungen" definierten Forderungen des Akteurs und der zur Realisierung relevanten Daten übermittelt.

Je nach Vertragsverhältnis zwischen Akteur und Finanzdienstleister werden die offenen Forderungen des angeschlossenen SD Akteur's, nach einer der 4 nachfolgend aufgeführten und möglichen Formen der Tätigkeit von Inkassounternehmen, durch diesen Finanzdienstleister realisiert.
1. Einziehung im Auftrag (Inkassounternehmen wird namens und im Auftrag des Auftraggebers tätig)
2. Einziehungsermächtigung (wie bei 1.; das Inkassounternehmen ist bevollmächtigt, im eigenen Namen die Zahlung zu verlangen)
3. Inkassozession (Abtretung der Forderung - § 398 BGB - zum Zwecke der Einziehung)
4. Vollabtretung (Forderungskauf - Abtretung an Inkassounternehmen ohne Zweckbindung).

Durch Nutzen dieser Funktion, wird automatisch auch die Funktion 4.5.11.3.1 Offene Posten Liste des Akteurs "statusgenau" gepflegt.

So wird in der offenen Posten Liste bspw. nach Einzug der Forderung diese als vorbehaltlich erhaltene Zahlung und nach Ablauf der Rückholfrist des Kunden als erhaltene Zahlung registriert und dem Akteur danach gutgeschrieben, dementsprechend buchhalterisch erfasst und die Daten der Funktion 4.5.11.4 SD Bilanz übermittelt und in diese eingepflegt.

### 4.5.11.5.3 SD Inkasso Pro:

Bei "4.5.11.5.2 SD Inkasso Pro" handelt es sich um eine Funktion des professionellen Forderungsmanagements.

Der Akteur hat hierbei die Möglichkeit, unkompliziert mit einem Advokaten eine geschäftliche Beziehung einzugehen, um ausstehende Forderungen schnell und effektiv zu realisieren.

Für den Fall, dass Forderungen des Akteurs sich als bisher nicht realisierbar erweisen, wird der Akteur durch das System auf diese aufmerksam gemacht. Entscheidet der Akteur sich dafür, anwaltlich den Einzug ausstehender Forderungen zu veranlassen, werden der beauftragten Kanzlei automatisch alle für die Realisierung notwendigen Daten zur Verfügung gestellt.

Das Ergebnis dieses Procederes wird, zwecks betriebswirtschaftlicher Auswertung, automatisch 4.5.11.4 SD Bilanz zur Verfügung gestellt.

### 4.6 Warn- sowie Notfallprocedere:

### 4.6.1 Spannungsverlust:

Verliert das SD die Spannungsversorgung, so werden die Depot Manager der angeschlossenen Akteure sofort gemäß dem definierten Algorithmus Notfallplan entsprechend, umgehend per Sms und/oder E-Mail benachrichtigt.

Gleichzeitig werden Hard- und Softwareschäden, durch eine im Falle des Spannungsverlusts eingeleiteten "Dasi" (Datensicherung) sowie einer "SD Startregelung nach Spannungsverlust" bestmöglich verhindert.

Außerdem versorgt das SD die Überwachungskameras weiterhin mit Spannung aus der Notstromreserve und versendet automatisch die im Speicher befindlichen Aufnahmen des vorab festgelegten Zeitraumes, sowie die Aufnahmen die während des Spannungsverlustes entstehen.

### 4.6.2 Temperaturschwankungen außerhalb vorab definierter Norm:

Registriert das digitale Temperaturaufzeichnungsgerät, wie in Punkt 2.2.3 beschrieben, eine relevante Abweichung vom vorab definierten gewünschten Temperaturbereich, so werden umgehend alle DM durch den SD DM Verteiler informiert, um schnellstmöglich eingreifen zu können.

### 4.6.3 Allgemeine Störungen:

Bei allgemeinen Störungen jeglicher Art werden auch hier die vorab definierten DM's der angeschlossenen Akteure per SMS und/oder E-Mail benachrichtigt, um durch ihr Aktivwerden, die Störung schnellstmöglich beheben zu können.

### 5. Daniel's Schlemmerdepot Premium Marketplace

Bei der optional verfügbaren Funktion "Daniel's Schlemmerdepot Premium Marketplace", bietet der Akteur durch die Software dem Kunden ein neues online Einkaufserlebnis an, welches durch 3D Grafiken den Einkauf auf einem richtigen Marktplatz oder Ladengeschäft so real wie möglich darstellt.

Der Kunde hat, wie in einem Videospiel, die Möglichkeit, über den Marktplatz zu laufen und die jeweiligen Geschäfte, welche auch optisch den Original-Ladengeschäften nachempfunden sind, bzw. die Markethall zu betreten.

Im Onlineshop selbst ist die Laden- und Thekengestaltung sowie die Bedienung durch das Stammpersonal der Realität nachempfunden.

### 6. Daniel's Schlemmerdepot Premium Marketplace Deluxe

Bei dieser Funktion besteht zusätzlich zu den in Punkt 5 definierten Funktionen die Möglichkeit, einen Chatbereich einzurichten. Somit können Kunden beim Einkauf im Schlemmerdepot Marketplace sich mit anderen Kunden treffen und bspw. über deren Einkäufe unterhalten und untereinander Kaufempfehlungen austauschen.

## Patentansprüche

1. Verfahren zur Handhabung, insbesondere automatischen Annahme, Einlagerung und Ausgabe von in einer Verpackung aufgenommenen Waren und/oder Warenkommissionen, wobei die Waren und/oder Warenkommissionen in eine zumindest abschnittsweise magnetisch oder ferromagnetisch ausgebildete Verpackung verpackt werden,
wobei die zumindest abschnittsweise magnetisch oder ferromagnetisch ausgebildete Verpackung mittels eines elektromagnetischen Greif-, Schiebe-und/oder Zugmittels magnetisch erfasst und zumindest abschnittsweise auf einen Transportbereich einer Annahme-/Ausgabeeinheit gezogen wird, wobei die Verpackung nach einem Transport mittels des Greif-, Schiebe- oder Zugmittels aus dem Transportbereich geschoben wird,
**dadurch gekennzeichnet,**
**dass** als Transportbereich ein solcher verwendet wird, der eine ebene elektromagnetische Transportfläche aufweist, in oder unter der eine elektromagnetische Vorrichtung angeordnet ist,
**dass** als Verpackung eine solche verwendet wird, die zumindest an Verpackungsabschnitten, die mit einem elektromagnetischen Mittel des Greif-, Schiebe- oder Zugmittels und mit der elektromagnetischen Vorrichtung der Transportfläche in Kontakt gelangen, magnetisch oder ferromagnetisch ausgebildet ist,
**dass** die zumindest abschnittsweise magnetisch oder ferromagnetisch ausgebildete Verpackung durch das elektromagnetische Greif-, Schiebe-und/oder Zugmittel vollständig auf die elektromagnetische Transportfläche gezogen wird und dass die Verpackung während des Transports durch die elektromagnetische Transportfläche magnetisch fixiert wird.

2. Verfahren nach Anspruch 1,
**dadurch gekennzeichnet,**
**dass** die zumindest abschnittsweise magnetische oder ferromagnetische Verpackung durch Aktivieren der elektromagnetischen Vorrichtung des elektromagnetischen Greif-, Schiebe- und/oder Zugmittels und durch Aktivierung der elektromagnetischen Vorrichtung der Transportfläche fixiert wird.

3. Vorrichtung, wie Warendepot (10, 12), zur Handhabung von in einer zumindest abschnittsweise magnetisch oder ferromagnetisch ausgebildeten Verpackung (136, 146, 148, 150) aufgenommenen Waren, umfassend
- Mittel (28, 32, 38, 40) zur Annahme von Waren von zumindest einem ersten Akteur wie Lieferant
- Mittel (38, 40, 42, 44) zur Lagerung der Waren, und
- Mittel (28, 30, 38, 40) zur automatisierten Abgabe der Waren an zumindest einen zweiten Akteur wie Entnehmer oder Kunde,
wobei die Mittel (38, 40, 42, 44) zur Lagerung der Waren ein Handling-System (40) mit einem Lager-Roboter (42) sowie einem Lagersystem in Form eines Regalsystems (44) umfassen und wobei der Lagerroboter eine Annahme-/Ausgabeeinheit (56) aufweist, mit einem Transportbereich (68), auf dem die Verpackung (136, 146, 148, 150) während des Transports gelagert ist und einem oberhalb des Transportbereichs verschieb- und/oder verschwenkbar angeordneten Greif-, Schiebe- oder Zugmittel, wobei in oder hinter dem Greif-, Schiebe- oder Zugmittel (76, 128) ein elektromagnetisches Mittel (112, 130) wie Elektromagnet angeordnet ist und wobei das Greif-, Schiebe- oder Zugmittel (76, 128) konfiguriert ist, die Verpackung (36, 146, 148, 150) magnetisch zu erfassen und zumindest bereichsweise auf den Transportbereich (68) zu ziehen bzw. von dem Transportbereich (68) zu schieben,
**dadurch gekennzeichnet,**
**dass** der Transportbereich (68) als eine ebene Transportfläche ausgebildet ist, wobei in oder unter der Transportfläche (68) eine elektromagnetische Vorrichtung (132) angeordnet ist,
**dass** als Verpackung (136, 146, 148, 150) eine solche verwendet wird, die zumindest an Verpackungsabschnitten (138, 140), die mit dem elektromagnetischen Mittel (130) des Greif-, Schiebe- oder Zugmittels (76, 128) und mit der elektromagnetischen Vorrichtung (132) der Transportfläche (68) in Kontakt gelangen, magnetisch oder ferromagnetisch ausgebildet ist,
**dass** das Greif-, Schiebe- oder Zugmittel konfiguriert ist, die Verpackung (136, 146, 148, 150) an einem der Verpackungsabschnitte (140) magnetisch zu erfassen, und vollständig auf die Transportfläche (68) zu ziehen und dass die Transportfläche (68) konfiguriert ist, den die Verpackung (136, 146, 148, 150) während des Transports magnetisch zu fixieren.

4. Vorrichtung nach zumindest einem der vorhergehenden Ansprüche,
**dadurch gekennzeichnet ,**
**dass** die Transportfläche (68) in Längsrichtung, d. h. quer zur Bewegungsrichtung verlaufende Begrenzungen (106, 108) aufweist.

5. Vorrichtung nach zumindest einem der vorhergehenden Ansprüche,
**dadurch gekennzeichnet,**
**dass** die Transportfläche (68) im Querschnitt U-förmig ausgebildet ist.

6. Vorrichtung nach zumindest einem der vorhergehenden Ansprüche,
**dadurch gekennzeichnet ,**
**dass** die Transportfläche (68) in Richtung der Fächer (52) der Regale (50) neigbar angeordnet ist.

7. Vorrichtung nach zumindest einem der vorhergehenden Ansprüche,
**dadurch gekennzeichnet,**
**dass** das Schiebe- oder Zugmittel (128) relativ zur Transportfläche (68) verschiebbar, verschwenkbar und/oder höhenverstellbar ist.

8. Vorrichtung nach zumindest einem der vorhergehenden Ansprüche,
**dadurch gekennzeichnet,**
**dass** die Verpackungsabschnitte (138, 140, 148) aus einem Verbundstoff (152) mit einer Einlagerung (142, 144, 154) und/oder einem Verbund mindestens eines magnetischen oder ferromagnetischen Materials (142, 144, 168, 160, 166) hergestellt sind.

9. Vorrichtung nach zumindest einem der vorhergehenden Ansprüche,
**dadurch gekennzeichnet,**
**dass** die Verpackungsabschnitte (156, 162, 164) aus einem oder mehreren nichtmagnetischen Materialien oder Stoffen hergestellt sind, welche innen oder außen mit einem magnetischen oder ferromagnetischen Material (158, 160) bestückt und/oder in einer besonderen Ausführung mit einem solchen Material fixiert wie verklebt ist.

10. Vorrichtung nach zumindest einem der vorhergehenden Ansprüche,
**dadurch gekennzeichnet,**
**dass** das magnetische oder ferromagnetische Material (166) ganz oder teilweise als ein magnetisches oder ferromagnetisches Einweg- oder Mehrwegchip oder als ein magnetisches oder ferromagnetisches Zahlungsmittel wie Münze ausgebildet ist.

11. Vorrichtung nach zumindest einem der vorhergehenden Ansprüche,
**dadurch gekennzeichnet,**
**dass** die Verpackungsabschnitte (138, 140) aus einem Verbundstoff (152) aus zwei oder mehreren Materialien (154) ausgebildet sind, wobei mindestens ein Material (154) magnetisch oder ferromagnetisch ist.

12. Vorrichtung nach zumindest einem der vorhergehenden Ansprüche,
**dadurch gekennzeichnet,**
**dass** die Verpackungsabschnitte (138, 140) aus einem unmagnetischen Stoff gefertigt sind und durch innen- und/oder außenseitiges Anbringen von magnetischem oder ferromagnetischem Material (142, 158, 160, 166) wie Metall voll- oder teilmagnetisch sind.

13. Vorrichtung nach zumindest einem der vorhergehenden Ansprüche,
**dadurch gekennzeichnet,**
**dass** der magnetische oder ferromagnetische Stoff (154) in Form einer Metallfolie in den Verbundwerkstoff (152) einlaminiert ist und/oder dass der magnetische oder ferromagnetische Stoff (142, 144; 158, 160) auf den unmagnetischen Rohstoff wie Pappe innen oder außen fixiert wie verklebt ist.

## Claims

1. Method for handling, in particular automatic reception, storage and dispensing of items and/or item consignments received in a packaging, wherein the items and/or item consignments are packaged in a packaging designed magnetic or ferromagnetic at least in some sections,
wherein the packaging designed magnetic or ferromagnetic at least in some sections is magnetically grasped and at least in some sections is pulled by means of an electromagnetic grasping, pushing and/or pulling means onto a transport area of an receiving/discharging unit, wherein the packaging after transport is pushed out of the transport area by means of the electromagnetic grasping, pushing and/or pulling means,
**characterized in,**
**that** the transport area used is one which has a flat electromagnetic transport surface, in or under which an electromagnetic device is arranged,
**that** the packaging used is of magnetic or ferromagnetic design at least at packaging sections which come into contact with the electromagnetic means of the gripping, pushing or pulling means and with the electromagnetic device of the transport surface, that the packaging, which is of magnetic or ferromagnetic design at least in sections, is pulled completely onto the electromagnetic transport surface by the electromagnetic gripping, pushing and/or pulling means, and
**that** the packaging is magnetically fixed by the electromagnetic transport surface during transport.

2. Method according to claim 1,
**characterized in,**
**that** the packaging designed magnetic or ferromagnetic at least in some sections is fixed by activating the electromagnetic device of the electromagnetic grasping, pushing and/or pulling means and is fixed by activating the electromagnetic device of the transport surface.

3. Device such as warehouse (10, 12) for handling of items received in a packaging (136, 146, 148, 150) designed magnetic or ferromagnetic at least in some sections, comprising
- means (28, 32, 38, 40) for receiving items from at least one first actor such as a supplier
- means (38, 40, 42, 44) for storing items, and
- means (28, 30, 38,40) for automated dispensing of items to at least one second actor such as a taker or customer,
where the means (38, 40, 42, 44) for storage of items comprises a handling system (40) with a warehouse robot (42) and a storage system in the form of a shelf system (44) and where the warehouse robot has a receiving/discharging unit (56) with a transport area (68), on which the packaging (136, 146, 148, 150) is supported during transport, and a gripping, pushing or pulling means arranged displaceably and/or pivotably above the transport area, wherein an electromagnetic means (112, 130) such as an electromagnet is arranged in or behind the gripping, pushing or pulling means (76, 128), an electromagnetic means (112, 130) such as an electromagnet being arranged in or behind the gripping, pushing or pulling means (76, 128), and wherein the gripping, pushing or pulling means (76, 128) being configured to magnetically grasp the packaging (36, 146, 148, 150) and to pull it, at least in regions, onto the transport region (68) or, respectively from the transport area (68),
**characterized in,**
**that** the transport area (68) is designed as a flat transport surface, wherein an electromagnetic device (132) is being arranged in or under the transport surface (68), that the packaging (136, 146, 148, 150) used is one which is magnetic or ferromagnetic at least at packaging sections (138, 140) which come into contact with the electromagnetic means (130) of the gripping, pushing or pulling means (76, 128) and with the electromagnetic device (132) of the transport surface (68),
**that** the gripping, pushing or pulling means is configured to magnetically grip the package (136, 146, 148, 150) at one of the packaging sections (140) and to pull it completely onto the transport surface (68), and
**that** the transport surface (68) is configured to magnetically fix the package (136, 146, 148, 150) during transport.

4. Device according to at least one of the preceding claims,
**characterized in,**
**that** the transport surface (68) has limitations (106, 108) running in the longitudinal direction, i.e. transversely to the direction of movement.

5. Device according to at least one of the preceding claims,
**characterized in,**
**that** the transport surface (68) is designed in U shape in cross-section.

6. Device according to at least one of the preceding claims,
**characterized in,**
**that** the transport surface (68) is arranged inclinable in the direction of the compartments (52) of the shelves (50).

7. Device according to at least one of the preceding claims,
**characterized in,**
**that** the pushing or pulling means (128) is movable, pivotable and/or height-adjustable relative to the transport surface (68).

8. Device according to at least one of the preceding claims,
**characterized in,**
**that** the packaging sections (138, 140, 148) are made from a composite material (152) with an inlay (142, 144, 154) and/or a composite of at least one magnetic or ferromagnetic material (142, 144, 168, 160, 166).

9. Device according to at least one of the preceding claims,
**characterized in,**
**that** the packaging sections (156, 162, 162) are made from one or more non-magnetic materials or substances which are provided on the inside or outside with a magnetic or ferromagnetic material (158, 160) and/or are fixed, such as glued, using such a material in a specific version.

10. Device according to at least one of the preceding claims,
**characterized in,**
**that** the magnetic or ferromagnetic material (166) is designed fully or partially as a magnetic or ferromagnetic disposable or reusable chip or as a magnetic or ferromagnetic means of payment such as a coin.

11. Device according to at least one of the preceding claims,
**characterized in,**
**that** the packaging sections (138, 140) are made from a composite material (152) of two or more materials (154) of which at least one material (154) is magnetic or ferromagnetic.

12. Device according to at least one of the preceding claims,
**characterized in,**
**that** the packaging sections (138, 140) is made from a non-magnetic substance and is fully or partially magnetic by affixing magnetic or ferromagnetic material (142, 158, 160, 166) such as metal to the inside or outside.

13. Device according to at least one of the preceding claims,
**characterized in,**
**that** the magnetic or ferromagnetic material (154) is laminated into the composite material (152) in the form of a metal foil and/or the magnetic or ferromagnetic material (142, 144; 158, 160) is fixed, such as glued, onto the inside or outside of the non-magnetic material such as cardboard.

## Revendications

1. Procédé destiné à la manutention, notamment à la réception, au stockage et à l'émission automatiques de marchandises et/ou de commandes préparées, contenues dans un emballage, sachant que les marchandises et/ou commandes préparées sont emballées dans un emballage au moins partiellement magnétique ou ferromagnétique,
sachant que l'emballage au moins partiellement magnétique ou ferromagnétique est saisi magnétiquement à l'aide d'un moyen électromagnétique de préhension, poussée ou traction et tiré au moins partiellement sur une zone de transport d'une unité de réception/émission, sachant qu'après un transport, l'emballage est poussé hors de la zone de transport, à l'aide du moyen de préhension, poussée ou traction,
**caractérisé en ce**
**qu'**est utilisée comme zone de transport une zone qui présente une surface de transport électromagnétique plane dans ou sous laquelle est disposé un dispositif électromagnétique,
**qu'**est utilisé comme emballage un emballage qui est magnétique ou ferromagnétique au moins sur des sections de l'emballage qui entrent en contact avec un moyen électromagnétique du moyen de préhension, poussée ou traction et avec le dispositif électromagnétique de la surface de transport,
**que** ledit emballage au moins partiellement magnétique ou ferromagnétique est tiré entièrement sur la surface de transport électromagnétique à l'aide du moyen électromagnétique de préhension, poussée ou traction et que l'emballage est fixé magnétiquement par la surface de transport électromagnétique pendant le transport.

2. Procédé selon la revendication 1
**caractérisé en ce**
**que** l'emballage au moins partiellement magnétique ou ferromagnétique est fixé par l'activation du dispositif électromagnétique du moyen électromagnétique de préhension, poussée ou traction et par l'activation du dispositif électromagnétique de la surface de transport.

3. Dispositif, tel qu'entrepôt (10, 12), destiné à la manutention de marchandises contenues dans un emballage (136, 146, 148, 150) au moins partiellement magnétique ou ferromagnétique, comprenant des
- moyens (28, 32, 38, 40) destinés à la réception des marchandises d'au moins un premier acteur, tel un fournisseur
- moyens (38, 40, 42, 44) destinés au stockage des marchandises, et
- moyens (28, 30, 38, 40) destinés à l'émission automatisée des marchandises à au moins un second acteur, tel qu'une personne chargée du retrait ou client,
sachant que les moyens (38, 40, 42, 44) destinés au stockage des marchandises comprennent un système de manutention (40) avec un robot d'entrepôt (42) ainsi qu'un système de stockage sous forme de système à rayonnages (44) et sachant que le robot d'entrepôt présente une unité de réception/d'émission (56), avec une zone de transport (68) sur laquelle l'emballage (136, 146, 148, 150) est placé pendant le transport et un moyen de préhension, poussée ou traction disposé de manière déplaçable et/ou pivotable au-dessus de la zone de transport, sachant qu'un moyen électromagnétique (112, 130), tel un électroaimant, est disposé dans ou derrière le moyen de préhension, poussée ou traction (76, 128) et sachant que le moyen de préhension, poussée ou traction (76, 128) est configuré pour saisir magnétiquement l'emballage (36, 146, 148, 150) et le tirer au moins partiellement sur la zone de transport (68) ou le pousser hors de la zone de transport (68),
**caractérisé en ce**
**que** la zone de transport (68) est conçue sous forme de surface de transport plane, sachant qu'un dispositif électromagnétique (132) est disposé dans ou sous la surface de transport (68),
**qu'**est utilisé comme emballage (136, 146, 148, 150) un emballage qui est magnétique ou ferromagnétique au moins sur des sections de l'emballage (138, 140) qui entrent en contact avec le moyen électromagnétique (130) du moyen de préhension, poussée ou traction (76,128) et avec le dispositif électromagnétique (132) de la surface de transport (68),
**que** le moyen de préhension, poussée ou traction est configuré pour saisir magnétiquement l'emballage (136, 146, 148, 150) au niveau d'une des sections de l'emballage (140), et le tirer entièrement sur la surface de transport (68) et
**que** la surface de transport (68) est configurée pour fixer magnétiquement l'emballage (136, 146, 148, 150) pendant le transport.

4. Dispositif selon au moins une des revendications précédentes,
**caractérisé en ce**
**que** la surface de transport (68) présente des délimitations (106, 108) s'étendant dans le sens longitudinal, c.-à-d. transversalement au sens de déplacement.

5. Dispositif selon au moins une des revendications précédentes,
**caractérisé en ce**
**que** la surface de transport (68) est conçue en coupe sous forme de U.

6. Dispositif selon au moins une des revendications précédentes,
**caractérisé en ce**
**que** la surface de transport (68) est disposée de manière inclinable en direction des casiers (52) des rayonnages (50).

7. Dispositif selon au moins une des revendications précédentes,
**caractérisé en ce**
**que** le moyen de poussée ou de traction (128) est déplaçable, pivotable et/ou réglable en hauteur par rapport à la surface de transport (68).

8. Dispositif selon au moins une des revendications précédentes,
**caractérisé en ce**
**que** les sections de l'emballage (138, 140, 148) sont fabriquées dans une matière composite (152) avec une couche intercalaire (142, 144, 154) et/ou un matériau composite constitué d'au moins un matériau magnétique ou ferromagnétique (142, 144, 168, 160, 166).

9. Dispositif selon au moins une des revendications précédentes,
**caractérisé en ce**
**que** les sections de l'emballage (156, 162, 164) sont fabriquées dans un ou plusieurs matériaux ou matières non magnétiques qui sont dotés, à l'intérieur ou à l'extérieur, d'un matériau magnétique ou ferromagnétique (158, 160) et/ou sont fixés, par exemple collés, avec ce type de matériau dans une version particulière.

10. Dispositif selon au moins une des revendications précédentes,
**caractérisé en ce**
**que** le matériau magnétique ou ferromagnétique (166) est conçu entièrement ou partiellement sous forme de puce magnétique ou ferromagnétique, à usage unique ou réutilisable, ou sous forme de moyen de paiement magnétique ou ferromagnétique, comme une pièce de monnaie.

11. Dispositif selon au moins une des revendications précédentes,
**caractérisé en ce**
**que** les sections de l'emballage (138, 140) sont constituées d'une matière composite (152) composée de deux matériaux ou plus (154), sachant qu'au moins un matériau (154) est magnétique ou ferromagnétique.

12. Dispositif selon au moins une des revendications précédentes,
**caractérisé en ce**
**que** les sections de l'emballage (138, 140) sont fabriquées dans une matière non magnétique et sont entièrement ou partiellement magnétiques par la fixation intérieure et/ou extérieure d'un matériau magnétique ou ferromagnétique (142, 158, 160, 166) comme du métal.

13. Dispositif selon au moins une des revendications précédentes,
**caractérisé en ce**
**que** la matière magnétique ou ferromagnétique (154) est introduite par laminage à l'intérieur du matériau composite (152), sous forme de film métallique et/ou que la matière magnétique ou ferromagnétique (142, 144 ; 158, 160) est fixée, par exemple collée, à l'intérieur ou à l'extérieur, sur la matière brute non magnétique comme du carton.
